# FASCICULE DE BREVET EUROPEEN

(11) **EP 4 377 151 B1**
(45) Date de publication et mention de la délivrance du brevet: **08.04.2026**
(21) Numéro de dépôt: 22754446.7
(22) Date de dépôt: 29.07.2022
(51) Int. Cl.: B60Q 1/068, F21S 41/32, F21S 41/147, F21S 41/151, B60Q 1/076, B60Q 1/10, B60Q 1/12, F21S 41/26, F21S 41/36, F21S 41/657, F21S 41/675

(54) **MODULE LUMINEUX POUR VÉHICULE AUTOMOBILE**
LEUCHTMODUL FÜR EIN KRAFTFAHRZEUG
LIGHT MODULE FOR A MOTOR VEHICLE

(30) Priorité: 30.07.2021 FR 2108381
(43) Date de publication de la demande: 05.06.2024
(73) Titulaire: VALEO VISION, 93012 Bobigny Cedex (FR)
(72) Inventeur: GIRAUD, Sylvain, 49000 Angers (FR); MARTIN, Nicolas, 49000 Angers (FR)
(74) Mandataire: Valeo Visibility
(86) Numéro de dépôt international: PCT/EP2022/071473
(87) Numéro de publication internationale: WO 2023/007016

(56) Documents cités:
- EP-A1- 1 270 322
- WO-A1-2020/025171
- DE-T2- 69 715 530
- FR-A1- 2 813 829
- JP-A- H06 176 604
- US-A1- 2008 198 617
- US-B1- 6 220 735

## Description

La présente invention se rapporte à un module lumineux pour véhicule. Elle trouve une application particulière mais non limitative dans les véhicules automobiles.

Dans le domaine des véhicules automobiles, un module lumineux pour véhicule bien connu de l'homme du métier comprend :
- au moins une source lumineuse configurée pour émettre des rayons lumineux,
- au moins un collecteur associé à ladite au moins une source lumineuse, ledit collecteur étant configuré pour collecter et orienter les rayons lumineux de ladite au moins une source lumineuse,
- au moins un élément optique de sortie configuré pour transmettre les rayons lumineux vers l'extérieur dudit véhicule automobile pour former un faisceau lumineux.

Le module lumineux est intégré dans un dispositif lumineux et comprend en outre un ou plusieurs masques qui sont des pièces de style et qui ferment le module lumineux. Le dispositif lumineux est un projecteur de véhicule automobile. Le faisceau lumineux peut être réglé de sorte à avoir un débattement vertical et latéral. Le débattement vertical est utile pour prendre en compte l'assiette du véhicule qui varie d'une catégorie de véhicule à une autre et qui varie selon la charge du véhicule et pour rabattre le faisceau lumineux pour éviter d'éblouir un occupant d'un véhicule qui arrive en face. Le débattement latéral est utile pour le réglage entre deux modules lumineux entre eux et pour assurer un bon alignement du faisceau lumineux par rapport à l'axe véhicule. A cet effet l'ensemble des pièces (ladite au moins une source lumineuse, ledit au moins un collecteur, ledit au moins un élément optique de sortie) du module lumineux est mis en mouvement.

Un inconvénient de cet état de la technique antérieur cité est qu'il est nécessaire d'avoir une pièce de structure pour mouvoir l'ensemble du module lumineux. L'ensemble pièce de structure et module lumineux est par conséquent très encombrant.

Des modules lumineux connus sont décrits dans les documents EP 1270322 A et US 6220735 B.

Dans ce contexte, la présente invention vise à proposer un module lumineux pour véhicule qui propose de résoudre l'inconvénient mentionné.

A cet effet, l'invention propose un module lumineux pour véhicule, tel que défini dans la revendication 1, ledit module lumineux comprenant:
- au moins une source lumineuse configurée pour émettre des rayons lumineux,
- au moins un collecteur associé à ladite au moins une source lumineuse, ledit collecteur étant configuré pour collecter et orienter les rayons lumineux de ladite au moins une source lumineuse vers au moins un élément optique de sortie,
- ledit au moins un élément optique de sortie configuré pour transmettre lesdits rayons lumineux vers l'extérieur dudit véhicule pour former un faisceau lumineux, caractérisé en ce que ledit module lumineux comprend en outre un système de déplacement relatif latéral dudit au moins un collecteur et de ladite au moins une source lumineuse associée par rapport audit au moins un élément optique de sortie de sorte à faire bouger latéralement ledit faisceau lumineux.

Par « déplacement relatif latéral » on comprend que le déplacement comporte au moins une translation latérale. Ainsi, l'au moins un collecteur et ladite au moins une source lumineuse associée se décalent latéralement par rapport à l'au moins un élément optique de sortie, c'est-à-dire que tout point de l'au moins un collecteur ou de ladite au moins une source lumineuse associée se décale latéralement par rapport à l'au moins un élément optique de sortie.

Ainsi, comme on va le voir ci-après, le fait de déplacer ledit au moins un collecteur et ladite au moins une source lumineuse associée par rapport audit au moins un élément optique de sortie permet d'avoir un débattement latéral et/ou vertical et ce sans avoir à déplacer l'ensemble des pièces du module optique. On supprime ainsi la pièce de structure qui était dédiée à cet effet. Cela évite également d'avoir des jeux avec les pièces de style et par conséquent cela évite des fuites de lumière au travers de ces jeux. L'avant du module lumineux reste fixe, l'avant étant formé par ledit au moins un élément optique de sortie et les pièces de style, tandis que l'arrière du module optique est mis en mouvement pour le déplacement latéral et/ou vertical, l'arrière étant formé par ledit au moins un collecteur et ladite au moins une source lumineuse.

Selon des modes de réalisation non limitatifs, ledit module lumineux peut comporter en outre une ou plusieurs caractéristiques supplémentaires prises seules ou selon toutes les combinaisons techniquement possibles, parmi les suivantes.

Selon un mode de réalisation non limitatif, ledit module lumineux comprend une pluralité de sources lumineuses et une pluralité de collecteurs associés chacun à une source lumineuse.

Selon un mode de réalisation non limitatif, ledit module lumineux comprend une pluralité d'éléments optiques de sortie dont l'une partie des éléments optiques de sortie est associée à une première portion dudit faisceau lumineux et l'autre partie des éléments optiques de sortie est associée à une deuxième portion dudit faisceau lumineux.

Selon un mode de réalisation non limitatif, l'élément optique de sortie comprend une lentille de projection, notamment une pluralité de lentilles de projection.

Selon un mode de réalisation non limitatif, l'élément optique de sortie consiste en une lentille de projection, ou l'élément optique de sortie consiste en une pluralité de lentilles de projection.

Selon un mode de réalisation non limitatif, l'élément optique de sortie comprend un réflecteur, notamment une pluralité de réflecteur. Un réflecteur est également appelé miroir.

Selon un mode de réalisation non limitatif, l'élément optique de sortie consiste en un réflecteur, ou l'élément optique de sortie consiste en une pluralité de réflecteur.

Selon un mode de réalisation non limitatif, la première portion représente une coupure inclinée dudit faisceau lumineux, et la deuxième portion représente une coupure plate dudit faisceau lumineux.

Selon l'invention, ledit système de déplacement relatif latéral comprend :
- une liaison pivot de centre A et d'axe AE et une liaison rotule de centre D disposées latéralement de part et d'autre dudit au moins un élément optique de sortie,
- une liaison pivot de centre B et une liaison pivot ou liaison rotule de centre C disposées latéralement de part et d'autre de la pluralité de collecteurs, la ou les liaisons pivots ayant un axe parallèle à l'axe AE,
- deux biellettes parallèles et de même longueur reliant chacune respectivement la liaison pivot de centre A et la liaison pivot de centre B, et la liaison rotule de centre D et la liaison pivot ou liaison rotule de centre C de façon à former un parallélogramme ABCD,
- un actionneur primaire configuré pour faire tourner la liaison pivot de centre A dans une direction sensiblement transversale de sorte à déplacer transversalement ladite pluralité de collecteurs,
- une liaison linéaire annulaire primaire de centre F reliant ledit actionneur primaire à une desdites biellettes pour former une manivelle primaire.

Selon un mode de réalisation non limitatif, ladite liaison pivot de centre A et d'axe AE est réalisée au moyen d'une liaison rotule de centre A et d'une liaison linéaire annulaire secondaire de centre E.

Selon un mode de réalisation non limitatif, ledit au moins un collecteur, ledit au moins un élément optique de sortie et lesdites biellettes sont configurés pour prendre une position dans laquelle ledit parallélogramme ABCD forme un rectangle.

Selon un mode de réalisation non limitatif, le déplacement relatif latéral dudit au moins un collecteur et de ladite au moins une source lumineuse associée génère un angle de débattement latéral compris entre plus ou moins 5° et notamment entre plus ou moins 3° pour le faisceau lumineux.

Selon un mode de réalisation non limitatif, ledit au moins un élément optique de sortie présente un angle d'inclinaison par rapport à une perpendiculaire à un axe optique du module lumineux maximum de 15°.

Selon un mode de réalisation non limitatif, ledit module lumineux comprend en outre un système de déplacement relatif vertical dudit au moins un collecteur et de ladite au moins une source lumineuse associée par rapport audit au moins un élément optique de sortie de sorte à faire bouger verticalement ledit faisceau lumineux.

Selon un mode de réalisation non limitatif, ladite liaison linéaire annulaire de centre E relie un actionneur secondaire à une desdites biellettes pour former une manivelle secondaire, ledit actionneur secondaire étant configuré pour faire tourner la pluralité de collecteurs autour de l'axe AD.

Selon un mode de réalisation non limitatif, ladite liaison linéaire annulaire primaire est d'axe parallèle à l'axe AE.

Selon un mode de réalisation non limitatif, le déplacement relatif vertical dudit au moins un collecteur et de ladite au moins une source lumineuse associée génère un angle de débattement vertical compris entre plus ou moins 10° et notamment entre plus ou moins 7°pour le faisceau lumineux.

Selon un mode de réalisation non limitatif, ledit au moins un élément optique de sortie présente un rayon de courbure minimum de 200mm.

Selon un mode de réalisation non limitatif, ledit faisceau lumineux est un faisceau route.

Selon un mode de réalisation non limitatif, ledit faisceau lumineux est un faisceau code.

Il est en outre proposé un dispositif lumineux comprenant un module lumineux selon l'une quelconque des revendications précédentes.

Selon un mode de réalisation non limitatif, le dispositif lumineux est un projecteur.

L'invention et ses différentes applications seront mieux comprises à la lecture de la description qui suit et à l'examen des figures qui l'accompagnent :
[Fig.1] est une vue de dessus schématique d'un module lumineux comprenant une pluralité de sources lumineuses, une pluralité de collecteurs, une pluralité d'éléments optiques de sortie, et un système de déplacement relatif latéral de ladite pluralité de collecteurs ensemble ladite pluralité de sources lumineuses par rapport à ladite pluralité d'éléments optiques de sortie, selon un mode de réalisation non limitatif de l'invention,
[Fig.2] est une vue dépliée schématique du module lumineux de la [Fig.1], ledit module lumineux comprenant en outre un système de déplacement relatif vertical de ladite pluralité de collecteurs ensemble ladite pluralité de sources lumineuses par rapport à ladite pluralité d'éléments optiques de sortie, selon un mode de réalisation non limitatif,
[Fig.3] est une vue de dessus dudit module lumineux de la [Fig.1] avec en sus au moins un cache, ledit module lumineux 1 étant représenté sans le système de déplacement relatif latéral et sans le système de déplacement relatif vertical, selon un mode de réalisation non limitatif,
[Fig.4] est une vue en coupe en perspective dudit module lumineux de la [Fig.3], selon un mode de réalisation non limitatif,
[Fig.5] est représentation schématique des rayons lumineux générés par ladite pluralité de sources lumineuses dudit module lumineux de la [Fig.1] qui sont collectés par ladite pluralité de collecteurs dudit module lumineux et réfléchis en direction de ladite pluralité d'éléments optiques de sortie dudit module lumineux, selon un mode de réalisation non limitatif,
[Fig.6] est la vue de dessus dudit module lumineux de la [Fig.3] sans ledit au moins un cache, ladite pluralité d'éléments optiques de sortie étant positionnée par rapport à ladite pluralité de collecteurs selon une première position, selon un mode de réalisation non limitatif,
[Fig.7] est la vue de dessus dudit module lumineux de la [Fig.3] sans ledit au moins un cache, ladite pluralité d'éléments optiques de sortie étant positionnée par rapport à ladite pluralité de collecteurs selon une deuxième position, selon un mode de réalisation non limitatif,
[Fig.8] est une vue arrière dudit module lumineux de la [Fig.3], ladite pluralité de collecteurs ensemble ladite pluralité de sources lumineuses étant positionnées selon une position horizontale nominale, selon un mode de réalisation non limitatif,
[Fig.9] est une vue arrière dudit module lumineux de la [Fig.3], ladite pluralité de collecteurs ensemble ladite pluralité de sources lumineuses étant positionnées selon une position horizontale située à gauche de la position horizontale nominale de la [Fig.8], selon un mode de réalisation non limitatif,
[Fig.10] est une vue arrière dudit module lumineux de la [Fig.3], ladite pluralité de collecteurs ensemble ladite pluralité de sources lumineuses étant positionnées selon une position horizontale située à droite de la position horizontale nominale de la [Fig.8], selon un mode de réalisation non limitatif,
[Fig.11] est une représentation graphique d'une image lumineuse du faisceau lumineux produit par le module lumineux de la [Fig.8], selon un mode de réalisation non limitatif,
[Fig.12] est une représentation graphique d'une image lumineuse du faisceau lumineux produit par le module lumineux de la [Fig.9], selon un mode de réalisation non limitatif,
[Fig.13] est une représentation graphique d'une image lumineuse du faisceau lumineux produit par le module lumineux de la [Fig.10], selon un mode de réalisation non limitatif,
[Fig.14] est une vue de côté dudit module lumineux de la [Fig.3], ladite pluralité de collecteurs ensemble ladite pluralité de sources lumineuses étant positionnées selon une position verticale nominale, selon un mode de réalisation non limitatif,
[Fig.15] est une vue de côté dudit module lumineux de la [Fig.3], ladite pluralité de collecteurs ensemble ladite pluralité de sources lumineuses étant positionnées selon une position verticale située au-dessus de la position verticale nominale de la [Fig.14], selon un mode de réalisation non limitatif,
[Fig.16] est une vue de côté dudit module lumineux de la [Fig.3], ladite pluralité de collecteurs ensemble ladite pluralité de sources lumineuses étant positionnées selon une position verticale située en dessous de la position verticale nominale de la [Fig.14], selon un mode de réalisation non limitatif,
[Fig.17] est une vue arrière dudit module lumineux de la [Fig.3], ladite pluralité de collecteurs ensemble ladite pluralité de sources lumineuses étant positionnées selon la position horizontale nominale de la [Fig.8] et selon la position verticale de la [Fig.15], selon un mode de réalisation non limitatif,
[Fig.18] est une vue arrière dudit module lumineux de la [Fig.3], ladite pluralité de collecteurs ensemble ladite pluralité de sources lumineuses étant positionnées selon la position horizontale de la [Fig.9] et selon la position verticale de la [Fig.15], selon un mode de réalisation non limitatif,
[Fig.19] est une arrière dudit module lumineux de la [Fig.3], ladite pluralité de collecteurs ensemble ladite pluralité de sources lumineuses étant positionnées selon la position horizontale de la [Fig.10] et selon la position verticale de la [Fig.15], selon un mode de réalisation non limitatif,
[Fig.20] est une représentation graphique d'une image lumineuse du faisceau lumineux produit par le module lumineux de la [Fig.17], selon un mode de réalisation non limitatif,
[Fig.21] est une représentation graphique d'une image lumineuse du faisceau lumineux produit par le module lumineux de la [Fig.18], selon un mode de réalisation non limitatif,
[Fig.22] est une représentation graphique d'une image lumineuse du faisceau lumineux produit par le module lumineux de la [Fig.19], selon un mode de réalisation non limitatif,
[Fig.23] est une vue arrière dudit module lumineux de la [Fig.3], ladite pluralité de collecteurs ensemble ladite pluralité de sources lumineuses étant positionnées selon la position horizontale nominale de la [Fig.8] et selon la position verticale de la [Fig.16], selon un mode de réalisation non limitatif,
[Fig.24] est une vue arrière dudit module lumineux de la [Fig.3], ladite pluralité de collecteurs ensemble ladite pluralité de sources lumineuses étant positionnées selon la position horizontale de la [Fig.9] et selon la position verticale de la [Fig.16], selon un mode de réalisation non limitatif,
[Fig.25] est une arrière dudit module lumineux de la [Fig.3], ladite pluralité de collecteurs ensemble ladite pluralité de sources lumineuses étant positionnées selon la position horizontale de la [Fig.10] et selon la position verticale de la [Fig.16], selon un mode de réalisation non limitatif,
[Fig.26] est une représentation graphique d'une image lumineuse du faisceau lumineux produit par le module lumineux de la [Fig.23], selon un mode de réalisation non limitatif,
[Fig.27] est une représentation graphique d'une image lumineuse du faisceau lumineux produit par le module lumineux de la [Fig.24], selon un mode de réalisation non limitatif,
[Fig.28] est une représentation graphique d'une image lumineuse du faisceau lumineux produit par le module lumineux de la [Fig.25], selon un mode de réalisation non limitatif,
[Fig.29] est une vue cinématique en perspective des éléments mécaniques du système de déplacement relatif latéral dudit module lumineux de la [Fig.1], et des éléments mécaniques d'un système de déplacement relatif vertical dudit module lumineux de la [Fig.1], lorsqu'ils sont au repos dans une position latérale nominale et dans une position verticale nominale, selon un mode de réalisation non limitatif,
[Fig.30] est une vue cinématique des éléments mécaniques du système de déplacement relatif vertical de la [Fig.29], lorsqu'ils sont en mouvement latéral, selon un mode de réalisation non limitatif,
[Fig.31] est une vue cinématique des éléments mécaniques du système de déplacement relatif vertical de la [Fig.29], lorsqu'ils sont en mouvement vertical, selon un mode de réalisation non limitatif,
[Fig.32] est une vue cinématique des éléments mécaniques du système de déplacement relatif latéral et des éléments mécaniques du système de déplacement relatif vertical de la [Fig.29], lorsqu'ils sont en mouvement vertical et latéral, selon un mode de réalisation non limitatif,
[Fig.33] est une vue cinématique de dessus et de côté des éléments mécaniques du système de déplacement relatif latéral et des éléments mécaniques du système de déplacement relatif vertical dudit module lumineux de la [Fig.29], lorsqu'ils sont au repos dans une position latérale nominale et dans une position verticale nominale, selon un mode de réalisation non limitatif,
[Fig.34] est une vue cinématique des éléments mécaniques du système de déplacement relatif vertical de la [Fig.29], lorsque ladite pluralité de collecteurs ensemble ladite pluralité de sources lumineuses sont dans une position verticale située en dessous de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans la position latérale nominale de la [Fig.33], selon un mode de réalisation non limitatif,

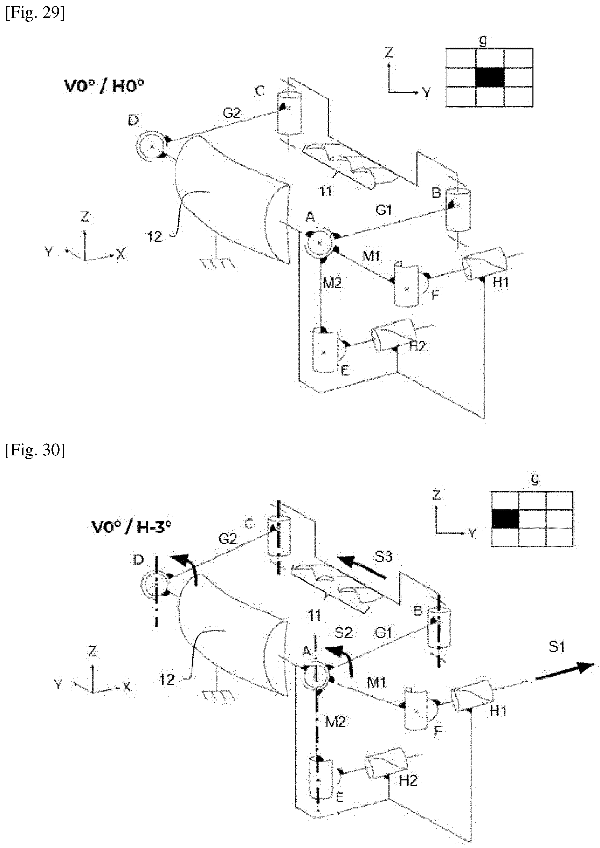

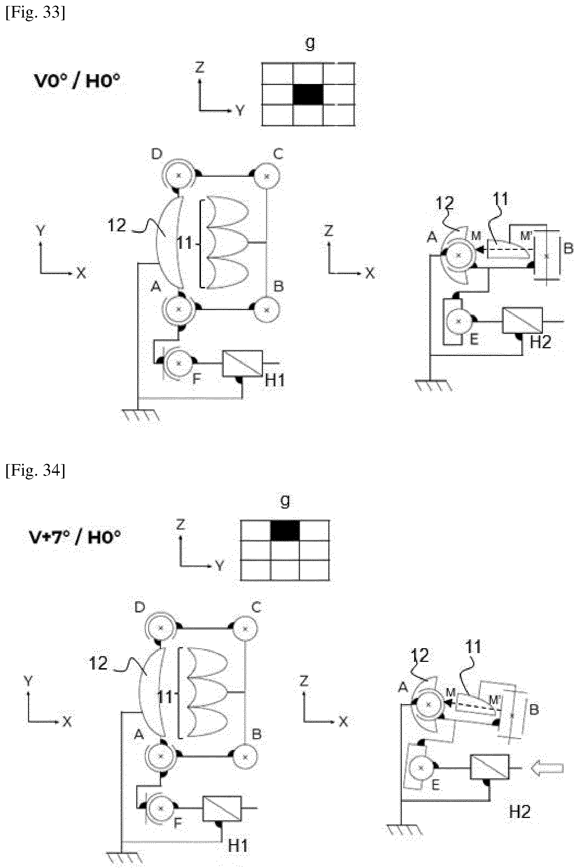

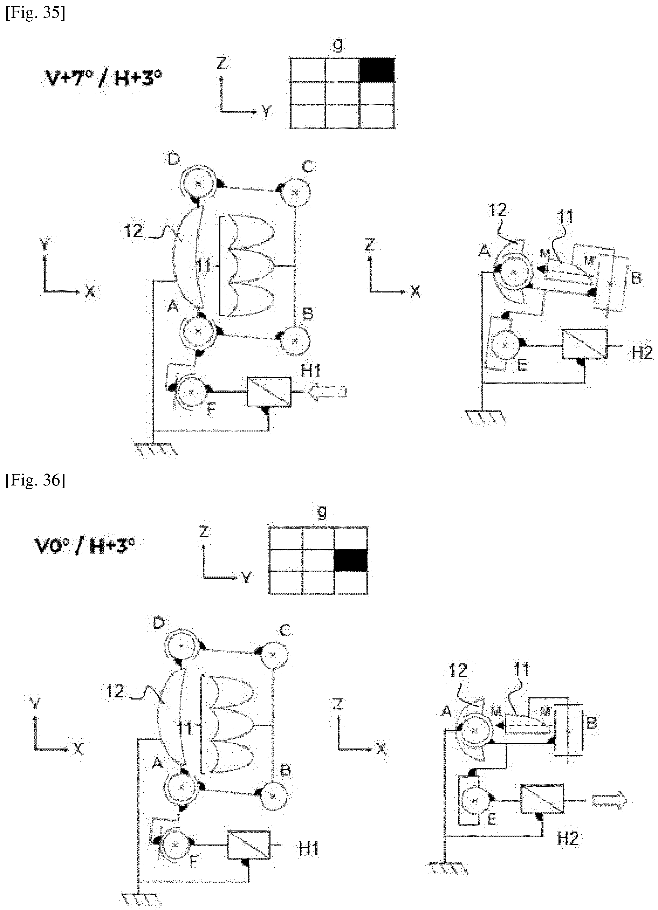

[Fig.35] est une vue cinématique des éléments mécaniques du système de déplacement relatif vertical de la [Fig.29], lorsque ladite pluralité de collecteurs ensemble ladite pluralité de sources lumineuses sont dans une position verticale située en dessous de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à gauche de la position latérale nominale de la [Fig.33], selon un mode de réalisation non limitatif,
[Fig.36] est une vue cinématique des éléments mécaniques du système de déplacement relatif vertical de la [Fig.29], lorsque ladite pluralité de collecteurs ensemble ladite pluralité de sources lumineuses sont dans la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à gauche de la position latérale nominale de la [Fig.33], selon un mode de réalisation non limitatif,

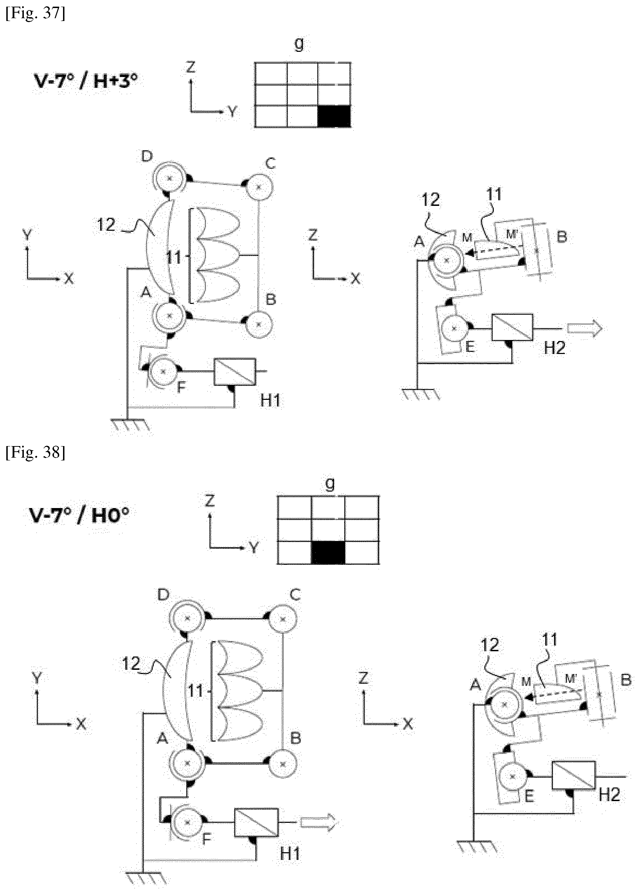

[Fig.37] est une vue cinématique des éléments mécaniques du système de déplacement relatif vertical de la [Fig.29], lorsque ladite pluralité de collecteurs ensemble ladite pluralité de sources lumineuses sont dans une position verticale située au-dessus de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à gauche de la position latérale nominale de la [Fig.33], selon un mode de réalisation non limitatif,
[Fig.38] est une vue cinématique des éléments mécaniques du système de déplacement relatif vertical de la [Fig.29], lorsque ladite pluralité de collecteurs ensemble ladite pluralité de sources lumineuses sont dans une position verticale située au-dessus de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans la position latérale nominale de la [Fig.33], selon un mode de réalisation non limitatif,

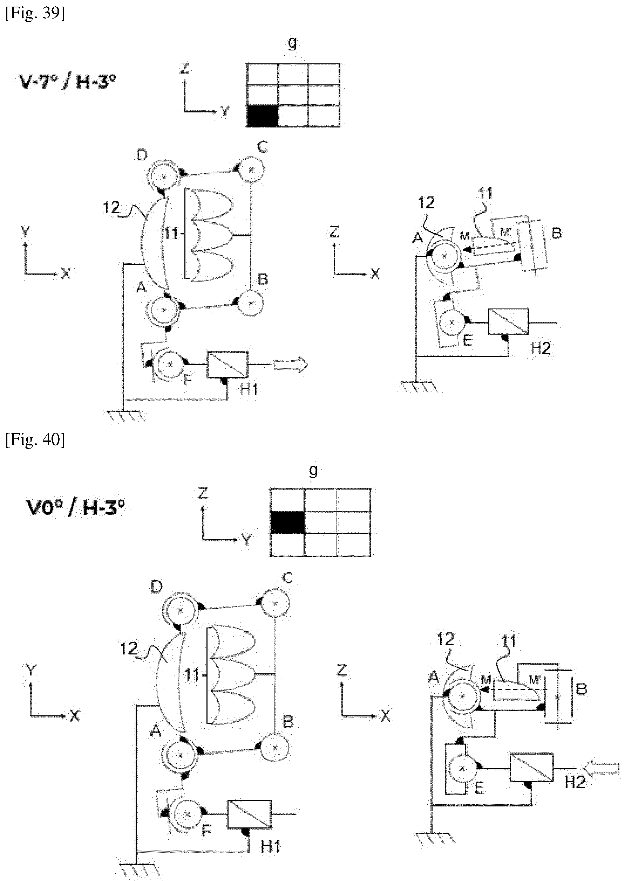

[Fig.39] est une vue cinématique des éléments mécaniques du système de déplacement relatif vertical de la [Fig.29], lorsque ladite pluralité de collecteurs ensemble ladite pluralité de sources lumineuses sont dans une position verticale située au-dessus de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à droite de la position latérale nominale de la [Fig.33], selon un mode de réalisation non limitatif,
[Fig.40] est une vue cinématique des éléments mécaniques du système de déplacement relatif vertical de la [Fig.29], lorsque ladite pluralité de collecteurs ensemble ladite pluralité de sources lumineuses sont dans la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à droite de la position latérale nominale de la [Fig.33], selon un mode de réalisation non limitatif,

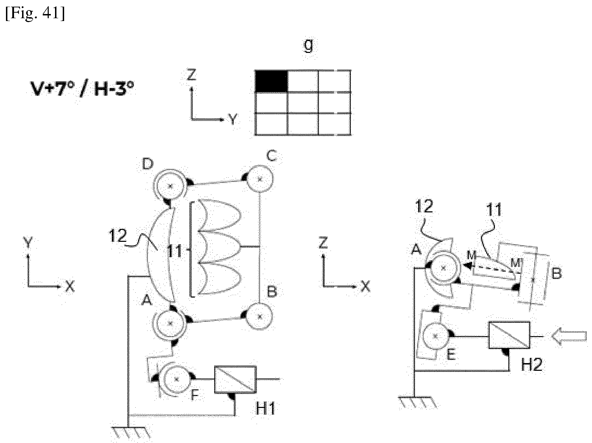

[Fig.41] est une vue cinématique des éléments mécaniques du système de déplacement relatif vertical de la [Fig.29], lorsque ladite pluralité de collecteurs ensemble ladite pluralité de sources lumineuses sont dans une position verticale située en dessous de la position verticale nominale de la [Fig.33], et des éléments mécaniques du système de déplacement relatif latéral de la [Fig.29], lorsque ladite pluralité de collecteurs ensemble ladite pluralité de sources lumineuses sont dans une position latérale située à droite de la position latérale nominale de la [Fig.33], selon un mode de réalisation non limitatif.

Les éléments identiques, par structure ou par fonction, apparaissant sur différentes figures conservent, sauf précision contraire, les mêmes références.

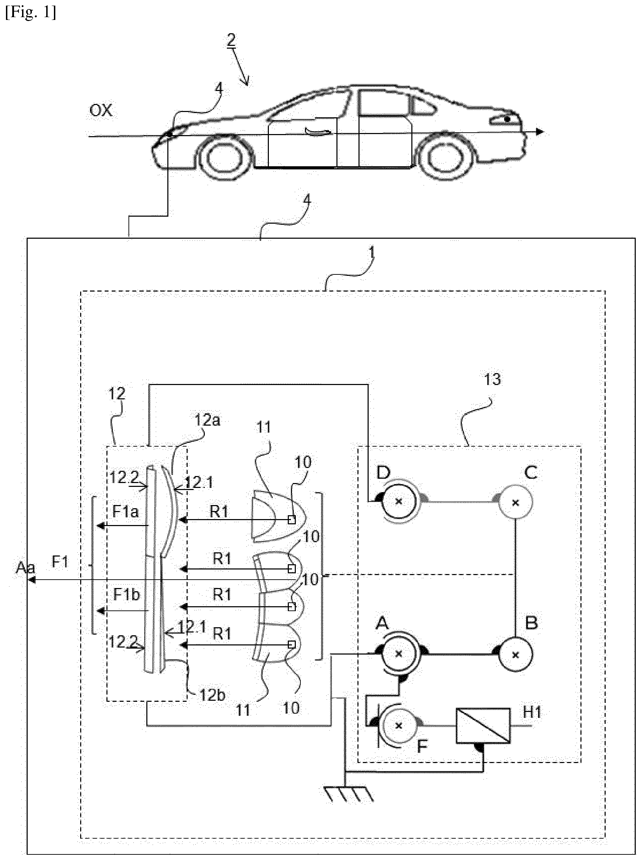

Le module lumineux 1 pour véhicule 2 selon l'invention est décrit en référence aux figures 1 à 41. Dans un mode de réalisation non limitatif, le véhicule 2 est un véhicule automobile. Par véhicule automobile, on entend tout type de véhicule motorisé. Ce mode de réalisation est pris comme exemple non limitatif dans la suite de la description. Dans la suite de la description, le véhicule 2 est ainsi autrement appelé véhicule automobile 2.

Tel qu'illustré sur la [Fig.1], le module lumineux 1 est configuré pour être intégré dans un boîtier d'un dispositif lumineux 4. Dans un mode de réalisation non limitatif, le dispositif lumineux 4 est un projecteur. Le dispositif lumineux 4 comprend ainsi un boîtier (non illustré) dans lequel est intégré au moins un module lumineux 1. Dans un mode de réalisation non limitatif, le dispositif lumineux 4 comprend une glace de sortie (non illustrée) qui ferme le boîtier. Dans un autre mode de réalisation non limitatif, c'est ledit au moins un élément optique de sortie 12 décrit plus loin qui ferme ledit boîtier.

Le module lumineux 1 comprend :
- au moins une source lumineuse 10,
- au moins un collecteur 11 associé à ladite au moins une source lumineuse 10,
- au moins un élément optique de sortie 12,
- un système de déplacement relatif latéral 13 dudit au moins un collecteur 1 et de ladite source lumineuse 10 associée par rapport audit au moins un élément optique de sortie 12 de sorte à faire bouger latéralement ledit faisceau lumineux F1. Le système de déplacement relatif latéral 13 est autrement appelé système de déplacement latéral 13.

Tel qu'illustré sur la [Fig.1], dans un mode de réalisation non limitatif, le module lumineux 1 comprend :
- une pluralité de sources lumineuses 10,
- une pluralité de collecteurs 11 associés chacun à une source lumineuse 10,
- une pluralité d'éléments optiques de sortie 12,
- un système de déplacement relatif latéral 13 de ladite pluralité de collecteurs 11 et de leurs sources lumineuses 10 associées par rapport auxdits éléments optiques de sortie 12 de sorte à faire bouger latéralement ledit faisceau lumineux F1.

Dans l'exemple non limitatif illustré, le module lumineux 1 comprend :
- quatre sources lumineuses 10,
- quatre collecteurs 11 associés chacun à une source lumineuse 10,
- deux éléments optiques de sortie 12.

Dans l'exemple non limitatif illustré, l'un des éléments optiques de sortie 12 est disposé en regard d'un des quatre collecteurs 11, et l'autre des éléments optiques de sortie 12 est disposé en regard des trois autres collecteurs 11.

Ce mode de réalisation non limitatif est pris comme exemple non limitatif dans la suite de la description. On notera que sur la [Fig.1], les sources lumineuses 10 sont illustrées par transparence.

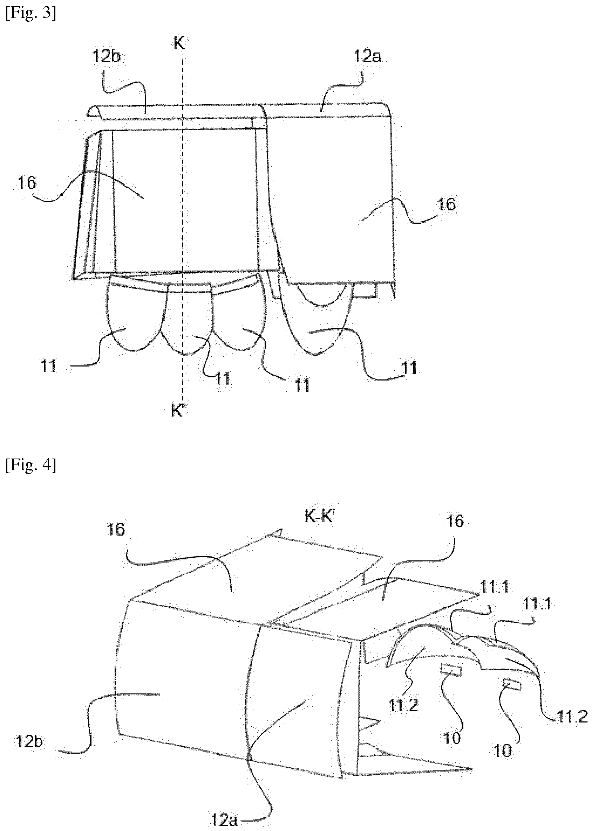

Dans un mode de réalisation non limitatif illustré sur la vue de dessus de la [Fig.3] et sur la vue en coupe de la [Fig.4], le module lumineux 1 comprend en outre au moins un cache 16, autrement appelé masque 16 ou pièce de style 16, pour fermer le module lumineux 1. Ledit au moins un cache 16 s'étend des collecteurs 11 vers lesdits éléments optiques de sortie 12.

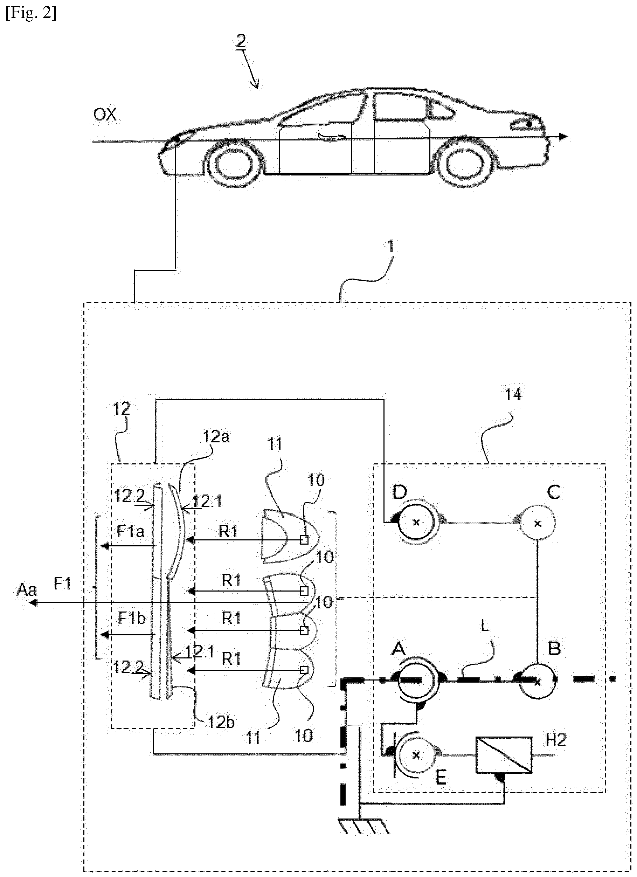

Dans un mode de réalisation non limitatif illustré sur la [Fig.2], le module lumineux 1 comprend en outre un système de déplacement relatif vertical 14 de ladite pluralité de collecteurs 11 et de leurs sources lumineuses 10 associées par rapport auxdits éléments optiques de sortie 12 de sorte à faire bouger verticalement ledit faisceau lumineux F1. Sur la [Fig.2], le système de déplacement relatif latéral 13 n'a pas été que partiellement illustré. On notera que sur la [Fig.2], au-dessus de la ligne L en traits et pointillés alternés, les éléments sont illustrés en vue de dessus, tandis que sous la ligne L, les éléments sont illustrés en vue de côté. Le système de déplacement relatif latéral 13 est autrement appelé système de déplacement latéral 13.

Les éléments du module lumineux 1 sont décrits en détail ci-après.

Dans un mode de réalisation non limitatif, les sources lumineuses 10 sont des sources de lumière à semi-conducteur. Dans un mode de réalisation non limitatif, les sources lumineuses à semi-conducteur font partie d'une diode électroluminescente ou d'une diode laser. Par diode électroluminescente, on entend tout type de diodes électroluminescentes, que ce soit dans des exemples non limitatifs des LED (« Light Emitting Diode » en anglais), des OLED (« Organic LED » en anglais), des AMOLED (« Active-Matrix-Organic LED » en anglais), ou encore des FOLED (« Flexible OLED » en anglais).

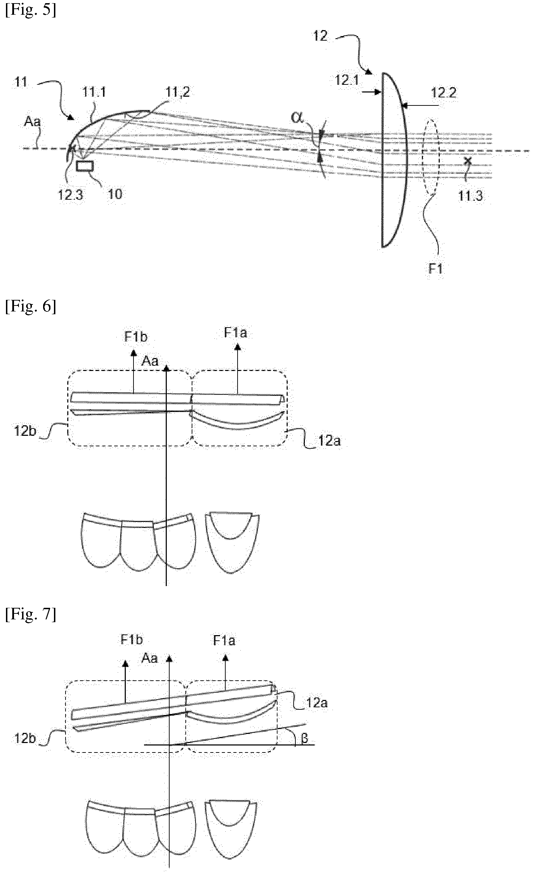

Les sources lumineuses 10 sont configurées pour émettre des rayons lumineux R1 (illustrés sur les figures 1 et 2). Ces rayons lumineux R1 vont arriver sur la pluralité de collecteurs 11. Les collecteurs 11 comprennent un support 11.1 (illustré sur les figures 4 et 5) en forme de coque ou calotte, et une surface réfléchissante 11.2 (illustrée sur les figures 4 et 5) sur la face intérieure du support 11.1. Dans des modes de réalisation non limitatifs, la surface réfléchissante 11.2 comprend un profil du type elliptique ou parabolique.

Tel qu'illustré sur la [Fig.5], la surface réfléchissante 11.2, si elle est du type elliptique, présente un deuxième foyer 11.3 situé à l'avant de l'élément optique de sortie 12 et à distance de l'axe optique Aa du module lumineux 1. Il est à noter qu'il est aussi possible que ce foyer 11.3 soit situé à l'arrière de l'élément optique de sortie 12 et/ou sur l'axe optique Aa, pour autant que ce soit à proximité dudit élément optique de sortie 12, de manière à réduire la largeur du faisceau lumineux F1 au niveau de la face d'entrée 12.1 dudit élément optique de sortie 12. Cela permet de réduire la hauteur de l'élément optique de sortie 12 et donc de réduire l'encombrement du module lumineux 1.

Chaque collecteur 11 de ladite pluralité de collecteurs 11 est associé à une source lumineuse 10. Chaque collecteur 11 est configuré pour collecter et orienter les rayons lumineux R1 de la source lumineuse 10 associée vers un élément optique de sortie 12, les rayons lumineux R1 se réfléchissant sur ladite surface réfléchissante 11.2 du collecteur 11. Dans un mode de réalisation non limitatif, la pluralité des collecteurs 11 forme un réflecteur dit multi- cavités.

La source lumineuse 10 associée à un collecteur 11 est située à un foyer de la surface réfléchissante 11.2 dudit collecteur 11 de manière que ses rayons lumineux R1 soient collectés et réfléchis suivant l'axe optique Aa (illustré sur la [Fig.5]) du module lumineux 1. Dans un mode de réalisation non limitatif, au moins une partie de ces rayons réfléchis présentent des angles d'inclinaison α dans un plan vertical par rapport audit axe optique Aa qui sont inférieurs ou égaux à 25°, de manière à être dans les conditions dites de Gauss, permettant d'obtenir un stigmatisme, c'est-à-dire une netteté de l'image projetée. Dans une variante de réalisation non limitative, les angles d'inclinaison α sont inférieurs ou égaux à 10°.

Dans un mode de réalisation non limitatif, les sources lumineuses 10 sont disposées sur un support PCB (« Printed Circuit Board ») (non illustré) qui est lui-même fixé à un radiateur (non illustré) qui permet de refroidir les sources lumineuses 10. Le radiateur est fixé aux collecteurs 11.

Comme on va le voir ci-après l'ensemble collecteurs 11 - sources lumineuses 10 - radiateur va pouvoir être mis en mouvement de sorte que le faisceau lumineux F1 puisse bouger verticalement et/ou latéralement, tandis que l'élément optique 12 de sortie reste immobile ainsi que le(s) masque(s) 16 dudit module lumineux 1. Ainsi, l'arrière du module lumineux 1 formé par l'ensemble collecteurs 11 - sources lumineuses 10 - radiateur bouge tandis que l'avant formé par l'élément optique de sortie 12 et le(s) masque(s) 16 reste fixe.

L'élément optique de sortie 12 est configuré pour transmettre les rayons lumineux R1 vers l'extérieur du véhicule automobile 2 pour former un faisceau lumineux F1 suivant l'axe optique Aa dudit module lumineux 1. Il comprend une face d'entrée 12.1 (illustrée sur les figures 1 et 5) qui reçoit les rayons lumineux R1 et une face de sortie 12.2 (illustrée sur les figures 1 et 5) par laquelle le faisceau lumineux F1 formé par les rayons lumineux R1 sort. Ledit au moins un élément optique de sortie 12 présente un foyer 12.3 (illustré sur la [Fig.5]) qui est situé le long de l'axe optique Aa, au niveau de la source lumineuse 10 ou encore en arrière de ladite source lumineuse 10. En l'occurrence le foyer 12.3 est situé au niveau de la surface réfléchissante 11.2 du collecteur 11. Il est à noter qu'il est aussi possible que ce foyer 12.3 soit situé à l'arrière ou à l'avant de la surface réfléchissante 11.2.

Dans un mode de réalisation non limitatif, le faisceau lumineux F1 est un faisceau lumineux segmenté. On peut ainsi éteindre certains segments pour ne pas éblouir un véhicule qui arrive en face dudit véhicule automobile 2 par exemple. Dans ce cas, la surface réfléchissante 11.2 des collecteurs 11 présente plusieurs secteurs verticaux.

Dans un premier mode de réalisation non limitatif, le faisceau lumineux F1 est un faisceau route, à savoir il présente une coupure plate.

Dans un deuxième mode de réalisation non limitatif, le faisceau lumineux F1 est un faisceau code, à savoir il présente une coupure inclinée et une coupure plate. La coupure plate et la coupure inclinée délimitent la partie supérieure de la portion respective du faisceau lumineux F1. Il présente ainsi deux parties, dont une première portion F1a qui représente une coupure inclinée appelée « kink » en anglais comprenant notamment une partie inclinée ; et une deuxième portion F1b qui représente une coupure plate appelée « Flat » en anglais. Les deux parties F1a, F1b sont décrites plus loin. Dans un mode de réalisation non limitatif, la coupure inclinée comprend une partie inclinée et une partie plate une formant un angle entre elles.

Dans un mode de réalisation non limitatif illustré sur les figures 1 ou 5, ledit au moins un élément optique de sortie 12 est une lentille de projection. C'est une lentille de projection convergente qui projette à l'infini l'image de la surface réfléchissante 11.2. Dans des modes de réalisation non limitatifs, la lentille de projection est plan-convexe ou convexe-convexe ou un ménisque. La lentille de projection est mince. Dans un mode de réalisation non limitatif, son épaisseur est inférieure à 7mm (millimètre). Dans un mode de réalisation, ledit au moins un élément optique de sortie 12 est plan ou présente une faible courbure. Dans un exemple non limitatif, la courbure a un rayon de courbure minimum de 200 mm (millimètres). En dessous, dans le cas d'un faisceau lumineux F1 comprend deux parties F1a et F1b décrites plus loin, le débattement vertical ne sera pas le même. Ledit au moins un élément optique de sortie 12 est ainsi relativement droit par rapport à l'axe véhicule OX. En vue de dessus, il est relativement rectiligne. Cela permet d'avoir un angle de débattement vertical suffisant (de 7° dans un exemple non limitatif). Et le déplacement latéral ne va pas déformer la coupure plate F1b du faisceau lumineux F1 décrite plus loin.

Dans un premier mode de réalisation non limitatif, ledit au moins un élément optique de sortie 12 est perpendiculaire à l'axe optique Aa du module lumineux 1, à savoir il n'est pas incliné par rapport à l'axe véhicule OX sur un plan horizontal lorsque le module lumineux 1 est en position de montage sur le véhicule 2. Tel qu'illustré sur la [Fig.6], les deux éléments optiques de sortie 12a, 12b représentés ne sont pas inclinés. Dans un deuxième mode de réalisation non limitatif, ledit au moins un élément optique de sortie 12 présente un angle d'inclinaison β sur ledit plan horizontal par rapport à la perpendiculaire à l'axe optique Aa du module lumineux 1, à savoir il est incliné par rapport à l'axe véhicule OX, l'axe optique Aa étant sensiblement parallèle à l'axe véhicule OX. Tel qu'illustré sur la [Fig.7] sur la vue de dessus, les deux éléments optiques de sortie 12a, 12b représentés sont inclinés. Le plan horizontal est un plan parallèle au sol qui contient l'axe véhicule OX.

Dans un mode de réalisation non limitatif, l'angle d'inclinaison β comprend une valeur maximale de 15°. Dans une variante de réalisation non limitative, l'angle d'inclinaison β est égal à 3°. On obtient ainsi un élément optique de sortie 12 très peu incliné par rapport à l'axe véhicule OX. Cela permet de maximiser la plage de débattement dans laquelle la coupure du faisceau lumineux F1 n'est pas déformée. Si l'ange d'inclinaison β est trop incliné, la coupure du faisceau lumineux F1 sera en effet déformée.

Dans un mode de réalisation non limitatif, le module lumineux 1 comprend une pluralité d'éléments optiques de sortie 12 dont l'une partie 12a des éléments optiques de sortie 12 est associée à une première portion F1a dudit faisceau lumineux F1 et l'autre partie 12b des éléments optiques de sortie 12 est associée à une deuxième portion F1b dudit faisceau lumineux F1. Tel qu'illustré sur la [Fig.1] ou la [Fig.5], il y a deux éléments optiques de sortie 12 dont l'un 12a est associé à la première portion F1a dudit faisceau lumineux F1 et l'autre 12b est associé à la deuxième portion F1b dudit faisceau lumineux F1. Cela permet de réaliser un faisceau code. La première portion F1a représente la coupure inclinée dite « kink ». Elle est autrement appelée coupure inclinée F1a ou coupure F1a. La deuxième portion F1b représente la coupure plate dite « flat ». Elle est autrement appelée coupure plate F1b ou coupure F1b. Sur l'exemple non limitatif illustré des figures 1 et 2, un collecteur 1 est utilisé pour réaliser la première portion F1a (« kink ») du faisceau lumineux F1 et trois collecteurs 11 sont utilisés pour réaliser la deuxième portion F1b (« Flat ») du faisceau lumineux F1. Ce mode de réalisation non limitatif de la pluralité d'éléments optiques de sortie 12 pour former un faisceau lumineux F1 avec une coupure inclinée et une coupure plate est pris comme exemple non limitatif dans la suite de la description. On notera que dans ce cas, dans un mode de réalisation non limitatif, les deux éléments optiques de sortie 12a et 12b présentent un même axe commun longitudinal perpendiculaire à l'axe véhicule OX.

Le système de déplacement relatif latéral 13 et le système de déplacement vertical 14 permettre de combiner un débattement latéral et un débattement vertical des collecteurs 11 ensemble les sources lumineuses 10 associées de sorte à permettre au faisceau lumineux F1 de se déplacer latéralement et/ou verticalement. On rappelle que c'est l'ensemble collecteurs 11 - sources de lumière 10 - radiateur qui se déplace, mais par souci de simplification on parlera uniquement du déplacement des collecteurs 11 par la suite. Le mouvement qui est latéral et/ou vertical se fait à l'intérieur du module lumineux 1.

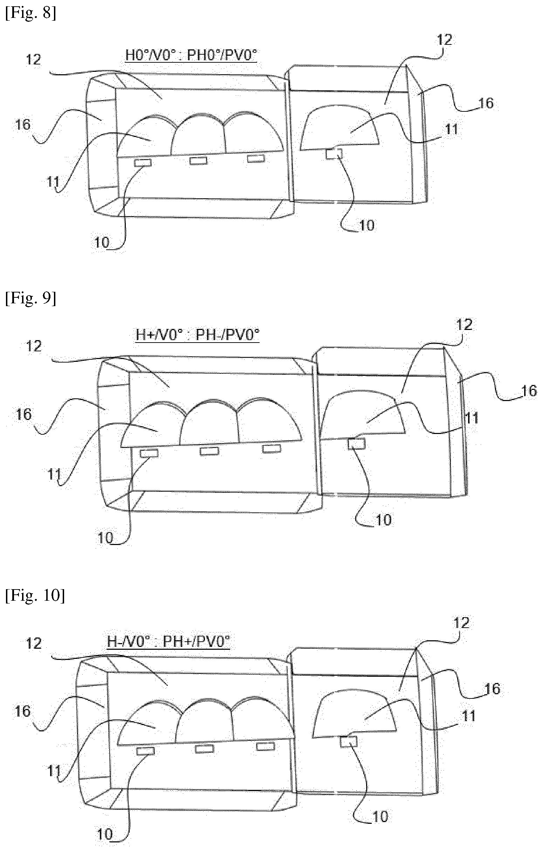

Tel qu'illustré sur les figures 8 à 10, le système de déplacement relatif latéral 13 permet de déplacer les collecteurs 11 de façon latérale par rapport aux éléments optiques de sortie 12 que ce soit :
- vers la gauche (position PH-) par rapport à un plan vertical qui contient l'axe véhicule OX pour avoir un faisceau de sortie F1 orienté vers la droite H+ ([Fig.9] en vue arrière) par rapport à une position latérale nominale H0 du faisceau lumineux F1 ( [Fig.8] en vue arrière), ladite position latérale nominale H0 du faisceau lumineux F1 correspondant à une position latéral nominale PH0° des collecteurs 11, ou
- vers la droite (position PH+) par rapport audit plan vertical pour avoir un faisceau de sortie F1 orienté vers la gauche H-([Fig.10] en vue arrière) par rapport à cette position latérale nominale H0°. On notera qu'on définit le plan vertical lorsque le module lumineux 1 est en position de montage sur le véhicule automobile 2.

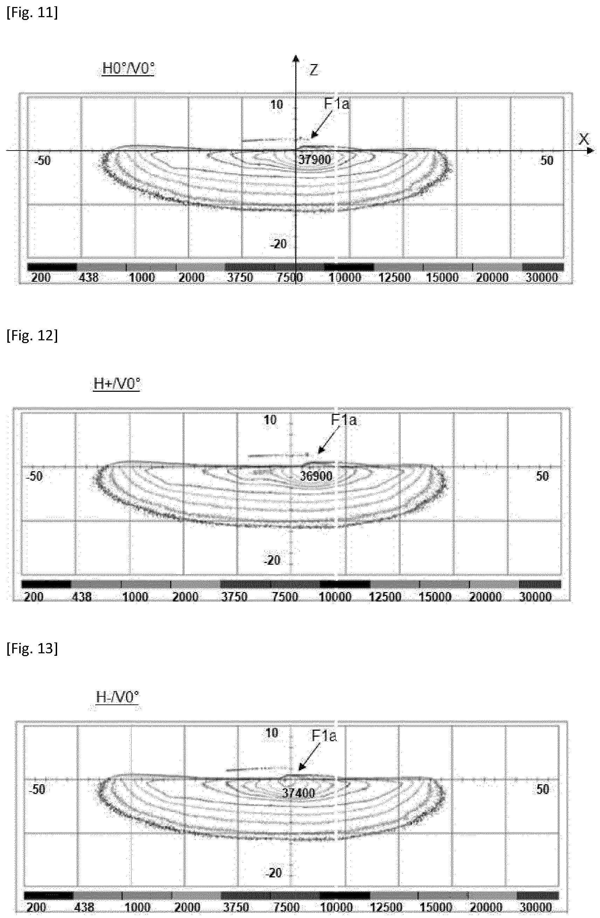

Cela permet d'obtenir respectivement un faisceau lumineux F1 dont l'image lumineuse est représentée en iso-candela sur les figures 11 à 13. Chaque courbe représente un niveau d'intensité lumineuse constant appelée iso-candela. Généralement la position latérale nominale H0° est définie par l'horizontale ; et l'horizontale est définie quand le module lumineux 1 est dans son orientation de montage dans la position normale de fonctionnement. Autrement dit, l'horizontale est le plan de la route sur laquelle roule le véhicule automobile 2. On notera sur les figures 8 à 10 que les collecteurs 11 positionnés à une position verticale nominale PV0° correspondant à une position verticale nominale V0° du faisceau lumineux F1.

Comme on peut le voir, la coupure inclinée F1a du faisceau lumineux F1 sur la [Fig.12] est située plus à droite H+ que celle sur la [Fig.11] (position latérale nominale H0). Et, la coupure F1a du faisceau lumineux F1 sur la [Fig.13] est située plus à gauche H- que celle sur la [Fig.11]. Comme on va le voir par la suite, le déplacement latéral s'effectue grâce à une translation circulaire des collecteurs 11. Dans un mode de réalisation non limitatif, le déplacement latéral des collecteurs 11 et des sources lumineuses 10 associées génère un angle de débattement latéral compris entre plus ou moins 5° et notamment entre plus ou moins 3° pour le faisceau lumineux F1. Dans une variante de réalisation non limitative, l'angle de débattement latéral est égal à plus ou moins 3°. Ces valeurs s'entendent en déplacement du faisceau lumineux F1 sur l'iso-candela. On notera qu'un déplacement latéral de 2mm des collecteurs 11 correspond à un débattement latéral du faisceau lumineux F1 d'environ 2°. On notera que le déplacement latéral n'a pas d'incidence sur la coupure plate F1b.

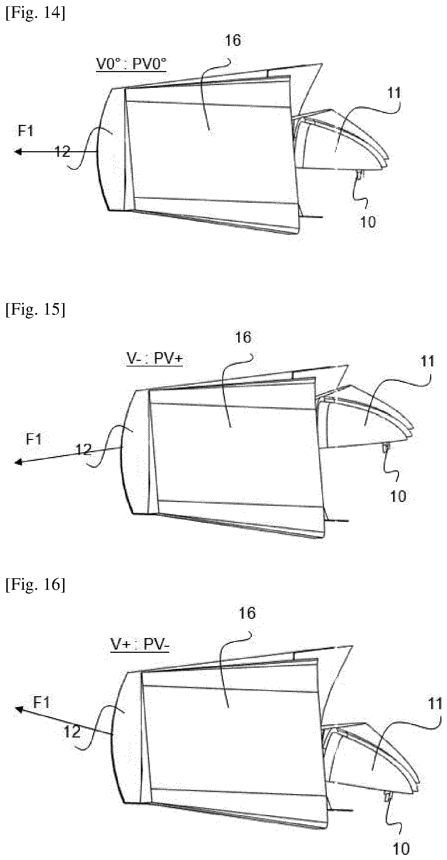

Tel qu'illustré sur les figures 14 à 16, le système de déplacement relatif vertical 14 permet de déplacer les collecteurs 11 de façon verticale par rapport aux éléments optiques de sortie 12 que ce soit :
- vers le haut (position PV+, autrement appelée position haute) par rapport au plan horizontal parallèle au sol qui contient l'axe véhicule OX pour avoir un faisceau lumineux F1 orienté vers le bas V- ([Fig.15]) par rapport à une position verticale nominale V0° ([Fig.14]), ou
- vers le bas (position PV-, autrement appelée position basse) par rapport audit plan horizontal parallèle pour avoir un faisceau lumineux F1 orienté vers le haut V+ ( [Fig.16]) par rapport à cette position verticale nominale V0°. On notera qu'on définit le plan horizontal lorsque le module lumineux 1 est en position de montage sur le véhicule automobile 2.

Cela permet de déplacer le faisceau lumineux F1 en dessous de la position verticale nominale V0° du faisceau lumineux F1 ou au-dessus de la position verticale nominale V0°. Comme on va le voir par la suite, le déplacement relatif vertical s'effectue grâce à une rotation des collecteurs 11. Dans un mode de réalisation non limitatif, le déplacement relatif vertical des collecteurs 11 génère un angle de débattement vertical compris entre plus ou moins 10° et notamment entre plus ou moins 7° pour le faisceau lumineux F1. Dans une variante de réalisation non limitative, l'angle de débattement vertical est sensiblement égal à plus ou moins 7° pour le faisceau lumineux F1. Cette valeur s'entend en déplacement du faisceau lumineux F1 sur l'iso-candela. On notera que le déplacement vertical étant réalisé par une rotation d'axe de rotation AD (décrit plus loin) au niveau des éléments optiques de sortie 12, une rotation mécanique de 1° correspond à un débattement vertical du faisceau lumineux F1 d'environ 1°.

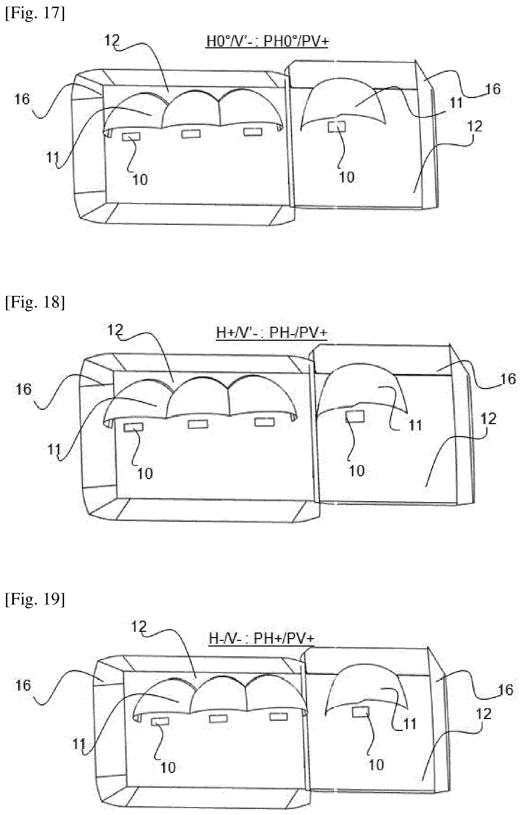

Les figures 17 à 19, et 23 à 25 illustrent différentes positionnements horizontaux et verticaux des collecteurs 11 par rapport aux éléments optiques de sortie 12. Une position nominale PV0°/PH0° est définie par une position verticale nominale PV0° et par une position latérale nominale PH0° qui correspond à une position nominale V0°/H0° dudit faisceau lumineux F1 définie par une position verticale nominale V0° et une par position latérale nominale H0° dudit faisceau lumineux F1. Par position nominale V0°/H0°, on entend la position du faisceau lumineux F1 réglé sur un véhicule automobile 2 dont toutes les dimensions sont au nominal. Comme on va le voir ci-après, lorsque les collecteurs 11 se déplacent à droite, cela oriente le faisceau lumineux F1 vers la gauche, tandis que lorsque les collecteurs 11 se déplacent à gauche, cela oriente le faisceau lumineux F1 vers la droite. Par ailleurs, lorsque les collecteurs 11 se déplacent vers le haut, le faisceau lumineux F1 s'incline vers le bas, tandis que lorsque les collecteurs 11 se déplacent vers le bas, le faisceau lumineux F1 s'incline vers le haut.

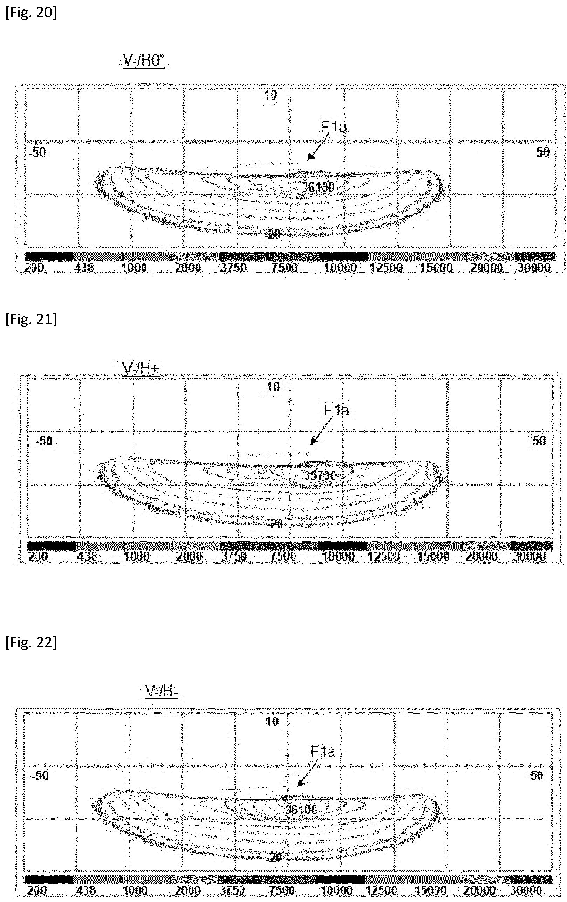

Ainsi, tel qu'illustré sur les figures 17 à 19, les collecteurs 11 sont positionnés dans une position verticale PV+ située au-dessus de la position verticale nominale PV0, autrement appelée position haute PV+. Par ailleurs, sur la [Fig.17], les collecteurs 11 sont positionnés à la position latérale nominale PH0°, tandis que sur la [Fig.18], ils sont positionnés à la position latérale à gauche PH-, et sur la [Fig.19], ils sont positionnés à la position latérale à droite PH+. Cela permet d'obtenir respectivement un faisceau lumineux F1 dont l'image est représentée sur les figures 20 à 22. Comme on peut le voir sur ces figures, le faisceau lumineux F1 se situe à une position verticale V-en dessous de la position nominale verticale V0°. Par ailleurs, la coupure F1a du faisceau lumineux F1 sur la [Fig.21] est située plus à droite H+ que celle sur la [Fig.20] (position latérale nominale H0°). Et, la coupure F1a du faisceau lumineux F1 sur la [Fig.22] est située plus à gauche H- que celle sur la [Fig.20].

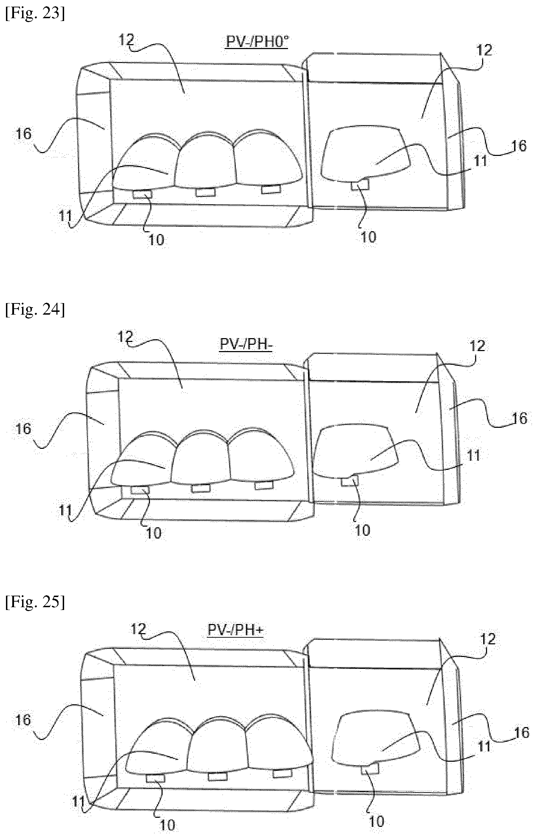

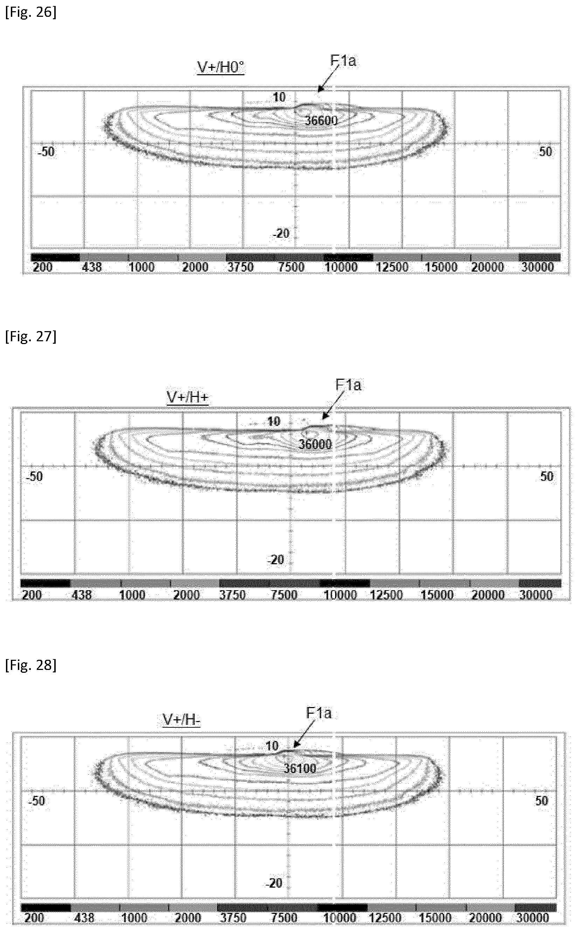

Ainsi, tel qu'illustré sur les figures 23 à 25, les collecteurs 11 sont positionnés dans une position verticale PV-située en dessous de la position verticale nominale V0°, autrement appelée position basse PV-. Par ailleurs, sur la [Fig.23], les collecteurs 11 sont positionnés à la position latérale nominale PH0°, tandis que sur la [Fig.24], ils sont positionnés à la position latérale à gauche PH-, et sur la [Fig.25], ils sont positionnés à la position latérale à droite PH-. Cela permet d'obtenir respectivement un faisceau lumineux F1 dont l'image est représentée sur les figures 26 à 28. Comme on peut le voir sur ces figures, le faisceau lumineux F1 se situe à une position verticale V+ au-dessus de la position nominale verticale V0°. Par ailleurs, la coupure F1a du faisceau lumineux F1 sur la [Fig.27] est située plus à droite H+ que celle sur la [Fig.26] (position latérale nominale H0°). Et, la coupure F1a du faisceau lumineux F1 sur la [Fig.28] est située plus à gauche H- que celle sur la [Fig.26].

En résumé :
- la position latérale nominale PH0° des collecteurs 11 correspond à la position latérale nominale H0° du faisceau lumineux F1,
- la position latérale PH- des collecteurs 11 correspond à la position latérale H+ du faisceau lumineux F1,
- la position latérale PH+ des collecteurs 11 correspond à la position latérale H- du faisceau lumineux F1,
- la position verticale nominale PV0° des collecteurs 11 correspond à la position verticale nominale V0° du faisceau lumineux F1,
- la position verticale PV- des collecteurs 11 correspond à la position verticale V+ du faisceau lumineux F1, et
- la position verticale PV+ des collecteurs 11 correspond à la position verticale V- du faisceau lumineux F1.

Le système de déplacement relatif latéral 13 et le système de déplacement relatif vertical 14 sont maintenant décrits en détail ci-après au niveau cinématique en référence aux figures 29 à 41. Sur les figures 29 à 41 sont également illustrés l'élément optique de sortie 12 et les collecteurs 11 formant le réflecteur.

Tel qu'illustré sur la [Fig.1] et la [Fig.29], le système de déplacement relatif latéral 13 comprend :
- une liaison pivot de centre A et d'axe AE et une liaison rotule de centre D disposées latéralement de part et d'autre dudit au moins un élément optique de sortie 12,
- une liaison pivot de centre B et une liaison pivot ou liaison rotule de centre C disposées de part et d'autre de la pluralité de collecteurs 11, la ou les liaisons pivots ayant un axe parallèle à AE,
- deux biellettes G1, G2 parallèles et de même longueur reliant chacune respectivement la liaison pivot de centre A et la liaison pivot de centre B, et la liaison rotule de centre D et la liaison pivot ou liaison rotule de centre C de façon à former un parallélogramme ABCD,
- un actionneur primaire H1 configuré pour faire tourner la liaison pivot de centre A dans une direction sensiblement transversale AD de sorte à déplacer transversalement ladite pluralité de collecteurs 11,
- une liaison linéaire annulaire primaire de centre F reliant ledit actionneur primaire H1 à une desdites biellettes G1, G2 pour former une manivelle primaire M1.

Plus précisément, les centres A, B, C, D forment les coins du parallélogramme ABCD, et le parallélogramme ABCD est formé par les segments AB, BC, CD et DA. Par abus de langage, on parle de parallélogramme ABCD pour l'ensemble formé par les deux biellettes G1, G2, l'élément optique de sortie 12, et les collecteurs 11.

Par abus de langage, on parle de liaisons A, B, C, D, E, F, pour les liaisons de centre respectif A, B, C, D, E, F. La manivelle primaire M1 est autrement appelée manivelle de poussée latérale M1 ou manivelle latérale M1. L'axe AE passe par les centres A et E.

On rappelle qu'une liaison rotule peut tourner dans tous les sens tandis qu'une liaison pivot tourne selon un axe et ne peut effectuer de translation.

Le déplacement transversal de la pluralité de collecteurs 11 est un mouvement de translation circulaire sur une faible course angulaire. Le mouvement de translation circulaire est une translation selon une trajectoire qui est une portion de cercle. On rappelle que l'angle de débattement latéral est compris entre plus ou moins 5° et notamment entre plus ou moins 3° pour le faisceau lumineux F1.

On notera que sur la [Fig.29], l'élément optique de sortie 12 est relié au symbole représentant une masse ce qui signifie que ledit élément optique de sortie 12 est fixe par rapport au véhicule automobile 2. Il ne bouge pas et reste immobile tandis que les collecteurs 11 vont se déplacer. On notera que les liaisons pivots qui sont des liaisons en rotation sont connues pour leur fiabilité. Contrairement à des systèmes de glissières, il n'y a pas de risque d'arc-boutement ou de coincement. En contrepartie, on passe sur un mouvement de translation circulaire (au lieu d'une translation rectiligne). Mais si on travaille sur un petit débattement angulaire et qu'au nominal le parallélogramme ABCD est un rectangle, alors la translation circulaire est proche de la translation rectiligne.

La manivelle de poussée latérale M1 relie la liaison linéaire annulaire primaire F à l'une des biellettes G1, G2 de façon à former le bras de levier AF (pour G1) ou à former le bras de levier DF (pour G2). La manivelle M1 est rigidement couplée à l'une des biellettes G1, G2, ici G1 dans l'exemple non limitatif illustré.

Dans un mode de réalisation non limitatif, les collecteurs 11, l'élément optique de sortie 12 et lesdites biellettes G1, G2 sont configurés pour prendre une position PH0° dans laquelle ledit parallélogramme ABCD forme un rectangle. Dans une variante de réalisation non limitative, cette position est la position nominale PH0° décrite précédemment. Cela permet d'avoir le mouvement le plus latéral possible sans composante axiale. Cela permet d'avoir une distance entre les collecteurs 11 et les éléments optiques de sortie 12 associés qui varie faiblement.

Le parallélogramme ABCD est déformable en ce que les angles DCB, CBA peuvent se modifier, mais les côtés sont de même longueur avec AB=DC et AD=BC. La droite passant par le centre de la liaison pivot A et le centre de la liaison linéaire annulaire F, et la droite passant par le centre de la liaison pivot A et le centre du pivot B sont perpendiculaires entre elles.

Les deux biellettes G1, G2 sont autrement appelées biellettes latérales G1, G2. Chaque biellette G1, G2 se déplace en rotation par rapport respectivement à l'axe AE, et à un axe parallèle à AE passant par la liaison rotule D. Les biellettes G1, G2 sont parallèles entre elles et de même longueur (AB=CD). L'axe AE passe par les centres A et E.

L'actionneur primaire H1 est autrement appelé actionneur latéral H1. Dans un mode non limitatif, l'actionneur latéral H1 est une vis manuelle qui est réglée en usine ou au garage. On a donc une liaison vis-écrou dans ce cas. Elle permet de bien centrer le faisceau lumineux F1 sur le véhicule automobile 2 en prenant en compte les tolérances de fabrication. L'actionneur primaire H1 peut avancer ou reculer.

Le déplacement latéral, autrement appelé déplacement transversal, de la pluralité de collecteurs 11 étant un mouvement de translation circulaire, l'actionneur primaire H1 fait tourner la liaison pivot de centre A dans une direction sensiblement transversale AD. Ainsi, le couplage de la liaison pivot A et de la liaison rotule D permet de définir un axe AD (passant par les centres A et D) pour le mouvement latéral. Généralement la direction transversale AD correspond à la direction horizontale lorsque le module est monté sur le véhicule automobile 2.

Dans un mode de réalisation non limitatif, ladite liaison pivot de centre A et d'axe AE est réalisée au moyen d'une liaison rotule de centre A et d'une liaison linéaire annulaire secondaire de centre E. Le centre A et le centre E ne sont pas confondus. La liaison linéaire annulaire secondaire E fixe la direction dans laquelle on va tourner au niveau des rotules A et D. La liaison rotule A et la liaison linéaire annulaire secondaire E forment un pivot équivalent.

Les deux liaisons pivots B, C sont d'axe de rotation parallèle à l'axe AE. Cela permet au parallélogramme ABCD d'être déformable pour créer le mouvement latéral.

On notera qu'une liaison linéaire annulaire est représentée schématiquement par une bille qui coopère dans un cylindre creux. On notera également qu'une liaison linéaire annulaire est une rotule capable de translater dans une direction prédéterminée. Dans un mode de réalisation non limitatif, la direction prédéterminée est l'axe AE.

Ainsi, dans un mode de réalisation non limitatif, la liaison linéaire annulaire primaire F est d'axe parallèle à l'axe AE. Cela créé un léger hyperstatisme lors du déplacement latéral du système de déplacement relatif latéral 13, mais qui est géré grâce à la flexibilité des pièces, aux jeux de fonctionnement et à la faible amplitude des déformations nécessaires.

En effet, lors du mouvement latéral, la partie femelle de la liaison linéaire annulaire primaire F décrit un cercle (dans le plan ABD, de centre A), puisque la biellette G1 tourne autour de l'axe AE. Cette partie femelle se désaligne en Y par rapport à la partie mâle (bille) qui reste forcément alignée avec l'axe de l'actionneur latéral H1. Cependant, ledit déplacement est minime. Par exemple, avec un bras de levier AF de 50mm et une course de 3°, le mouvement en Y est de -0.07mm. La flexibilité des pièces et les jeux de fonctionnement sont capables d'encaisser cette variation. Si on choisit la configuration inverse (liaison linéaire annulaire d'axe AF), on n'a plus d'hyperstatisme sur le mouvement latéral. La bille se déplace tout simplement de 0.07mm dans la partie femelle de la liaison (c'est le rôle habituel des liaisons linéaires annulaires dans un système de réglage de projecteur). En revanche, on crée un hyperstatisme plus important sur le mouvement combiné latéral et vertical.

Sur la [Fig.29], les collecteurs 11 sont dans la position latérale nominale PH0° et dans la position verticale nominale PV0°, appelée position nominale PV0°/PH0° qui correspond au faisceau lumineux F1 dans une position nominale V0°/H0° illustrée par le carré noir sur la grille de déplacement g. Par extension, on dit que les éléments mécaniques du système de déplacement relatif latéral 13/vertical 14 sont dans la position nominale PV0°/PH0°. Par souci de simplification, on n'a représenté que la position nominale V0°/H0° du faisceau lumineux F1.

Sur la [Fig.30], les collecteurs 11 effectuent un mouvement de translation circulaire qui permet de déplacer le faisceau lumineux F1 de façon latérale sur la gauche tel qu'indiqué par le carré noir dans la grille de déplacement g illustrée. Tel qu'illustré sur la [Fig.30], lorsque l'on tire sur l'actionneur primaire H1 (en pratique on dévisse manuellement la vis), on tire sur la liaison linéaire annulaire primaire F, ce qui créé une rotation autour de l'axe AE qui fait bouger l'ensemble des collecteurs 11 vers la droite dans l'exemple non limitatif illustré de sorte que le faisceau lumineux F1 se déplace vers la gauche tel qu'indiqué par le carré noir dans la grille de déplacement g illustrée. Pour faire bouger l'ensemble des collecteurs 11 vers la gauche de sorte que le faisceau lumineux F1 se déplace vers la droite, il faut pousser sur l'actionneur primaire H1 (en pratique on visse manuellement la vis).

Ainsi, le mouvement linéaire (flèche référencée S1) de l'actionneur latéral H1 entraîne une rotation (flèche référencée S2) de la biellette G1 autour de l'axe AE passant par le centre de la liaison rotule A et le centre de la liaison linéaire annulaire secondaire E. Ceci entraîne ensuite une déformation du parallélogramme ABCD. Il en résulte un mouvement de translation circulaire (flèche référencée S3) du réflecteur formé par la pluralité de collecteurs 11 (il reste parallèle sur toute la trajectoire à sa position nominale de départ PV0° de la [Fig.29]).

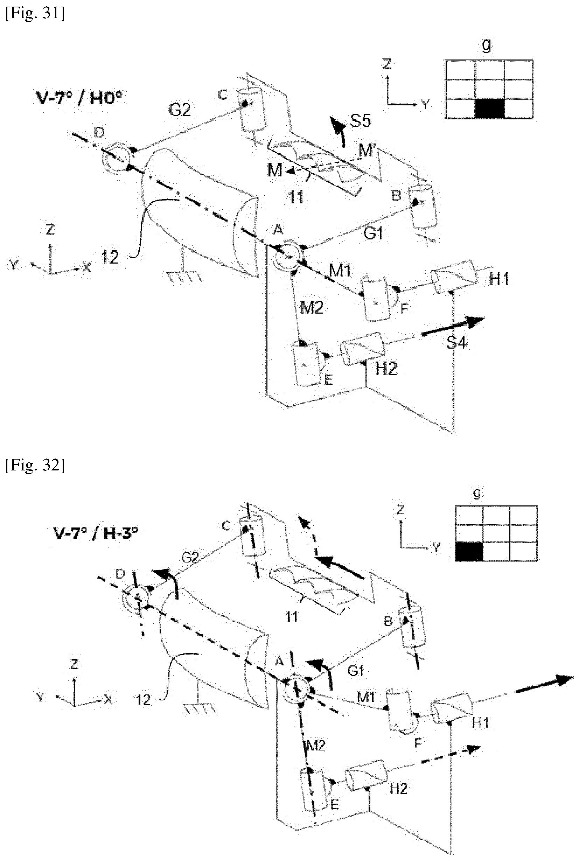

Tel qu'illustré sur la [Fig.2] et la [Fig.31], le système de déplacement relatif vertical 14 comprend :
- la liaison pivot de centre A et d'axe AE et une liaison rotule de centre D disposées de part et d'autre dudit au moins un élément optique de sortie 12,
- la liaison pivot de centre B et la liaison pivot ou liaison rotule de centre C disposées de part et d'autre de la pluralité de collecteurs 11, la ou les liaisons pivots ayant un axe parallèle à AE,
- les deux biellettes G1, G2 parallèles et de même longueur reliant chacune les centres A, D et les centres B, C situés d'un même côté de façon à former un parallélogramme ABCD,
- ladite liaison linéaire annulaire primaire de centre F.

Pour le système de déplacement relatif vertical 14, dans un mode de réalisation non limitatif, ladite liaison linéaire annulaire primaire F est d'axe parallèle à l'axe AE.

Pour le système de déplacement vertical 14, dans un mode de réalisation non limitatif, la liaison pivot de centre A et d'axe AE est réalisée au moyen d'une liaison rotule de centre A et d'une liaison linéaire annulaire de centre E. Dans un mode de réalisation non limitatif, la liaison annulaire secondaire E est d'axe AE.

Pour le système de déplacement vertical 14, la liaison linéaire annulaire primaire F se trouve sur l'axe AD passant par les centres A et D lorsque lesdits collecteurs 11 sont dans la position nominale latérale PH0° (tel qu'illustré sur la [Fig.31]). Cela permet que les collecteurs 11 tournent autour de l'axe AD. Ainsi, le couplage de la liaison rotule A et de la liaison rotule D permet de définir un axe de rotation AD pour le mouvement vertical. On notera que lorsqu'on est en dehors de la position nominale latérale PH0°, la liaison linéaire annulaire primaire F n'est pas sur l'axe AD (tel qu'illustré sur la [Fig.32]).

La liaison linéaire annulaire de centre E relie un actionneur secondaire H2 à une desdites biellettes G1, G2 pour former une manivelle secondaire M2, ledit actionneur secondaire H2 étant configuré pour faire tourner la pluralité de collecteurs 11 autour de l'axe AD. La manivelle secondaire M2 est autrement appelée manivelle de poussée verticale M2 ou manivelle verticale M2.

Ainsi, le système de déplacement vertical 14 comprend en outre ledit actionneur secondaire H2. L'actionneur secondaire H2 est autrement appelé actionneur vertical H2.

On notera que le système de déplacement vertical 14 utilise les liaisons rotules A, D, les liaisons pivots B, C et les biellettes G1, G2 déjà utilisées par le système de déplacement relatif latéral 13. Le système de déplacement relatif latéral 13 et le système de déplacement vertical 14 partagent ainsi des éléments communs. On a ainsi un système de déplacement global compact.

La manivelle de poussée verticale M2 relie la liaison linéaire annulaire secondaire E à l'une des biellettes G1, G2 de façon à former le bras de levier AE (pour G1) ou à former le bras de levier DE (pour G2). La manivelle M2 est rigidement couplée à l'une des biellettes G1, G2, ici G1 dans l'exemple non limitatif. Dans un autre exemple non limitatif, la manivelle M2 peut être couplée une biellette G1, G2 qui est différente de celle de M1.

La droite passant par le centre de la liaison rotule A et le centre de la liaison linéaire annulaire E, et la droite passant par le centre de la liaison rotule A et le centre de la liaison pivot B sont perpendiculaires entre elles. Cela permet d'avoir un réglage latéral qui est bien dans un plan horizontal lorsqu'on est en position verticale nominale PV0°.

Dans des modes de réalisation non limitatifs, l'actionneur vertical H2 est une vis manuelle qui est réglée en usine ou un actionneur électrique qui lorsque le véhicule automobile 2 est en fonctionnement permet ainsi de corriger l'assiette du véhicule automobile 2 de façon dynamique, ou une combinaison des deux. L'actionneur électrique comprend un moteur électronique. L'actionneur secondaire H2 peut avancer ou reculer. Il est configuré pour faire tourner la liaison rotule A dans une direction verticale de sorte à faire pivoter ladite pluralité de collecteurs 11 autour de l'axe AD. Il permet ainsi un mouvement de rotation des collecteurs 11 autour de l'axe AD.

Sur la [Fig.31], les collecteurs 11 effectuent un mouvement de rotation qui permet de déplacer le faisceau lumineux F1 de façon verticale vers le bas tel qu'indiqué par le carré noir dans la grille de déplacement g illustrée. Tel qu'illustré sur la [Fig.31], lorsque l'on tire sur l'actionneur vertical H2, on tire sur la liaison linéaire annulaire secondaire E qui créée une rotation selon un axe AD qui fait bouger l'ensemble des collecteurs 11 de sorte qu'ils se déplacent vers le haut (l'axe MM' des collecteurs 11 s'inclinant vers le bas) de sorte que le faisceau lumineux F1 s'oriente vers le bas tel qu'indiqué par le carré noir dans la grille de déplacement g illustrée. Pour faire bouger l'ensemble des collecteurs 11 pour qu'ils se déplacent vers le bas de sorte que le faisceau lumineux F1 s'incline vers le haut, il faut pousser sur l'actionneur secondaire H2.

Ainsi, le mouvement linéaire (flèche référencée S4) de l'actionneur vertical H2 entraîne une rotation (flèche référencée S5) de l'ensemble réflecteur (formé par les collecteurs 11) - deux biellettes G1, G2, autour de l'axe passant par le centre des deux liaisons rotules A et D. Cet axe AD est sensiblement perpendiculaire à l'axe longitudinal du véhicule OX.

Sur la [Fig.32], les collecteurs 11 effectuent un mouvement de translation circulaire et également un mouvement de rotation qui permet de déplacer le faisceau lumineux F1 de façon latérale vers la gauche et de façon verticale vers le bas tel qu'indiqué par le carré noir dans la grille de déplacement g illustrée. L'actionneur latéral H1 et l'actionneur vertical H2 sont ainsi tous les deux sollicités. On notera que pour le déplacement latéral ou pour le déplacement vertical, la distance entre les deux liaisons pivots C et B reste la même.

Les figures de dessus et de côtés 33 à 41 illustrent les différentes positions possibles des collecteurs 11 et par conséquent du faisceau lumineux F1. Les figures montrent comment l'on passe d'une position à une autre. Dans les exemples non limitatifs illustrés sur ces figures 33 à 41, par souci de simplification, seul trois collecteurs 11 et un seul élément de sortie 12 ont été illustrés.

La [Fig.33] illustre la position nominale V0°/H0° du faisceau lumineux F1 et donc la position nominale PV0°/PH0° des collecteurs. Pour des questions de clarté, seule la position verticale et latérale du faisceau lumineux F1 est indiquée sur les figures.

La [Fig.34] illustre une position verticale haute V+7°et une position latérale nominale H0° du faisceau lumineux F1. Dans l'exemple non limitatif, les collecteurs 11 sont positionnés 7° en dessous de la position verticale nominale PV0° et dans la position latérale nominale PV0°. Sur la vue de côté, on peut voir qu'en poussant sur l'actionneur vertical H2, les collecteurs 11 descendent vers le bas en position basse (leur axe MM' s'incline vers le haut) de sorte que le faisceau lumineux F1 s'incline vers le haut et passe ainsi de la position verticale nominale V0° à la position verticale haute V+7°, tandis que l'élément optique de sortie 12 n'a pas bougé. Le faisceau lumineux F1 qui sort de l'élément optique de sortie 12 va ainsi être orienté vers le haut et latéralement centré tel qu'illustré par le carré noir dans la grille g illustrée.

La [Fig.35] illustre une position verticale haute V+7°et une position latérale droite H+3° du faisceau lumineux F1. Dans l'exemple non limitatif, les collecteurs 11 sont positionnés 7° en dessous de la position verticale nominale PV0° et à gauche de la position latérale nominale PH0°. Ils restent en position basse. Sur la vue de dessus, on peut voir qu'en poussant sur l'actionneur latéral H1, les collecteurs 11 se déplacent vers la gauche de sorte que le faisceau lumineux F1 soit positionné à 3° à droite de la position latérale nominale H0°, tandis que l'élément optique de sortie 12 n'a pas bougé. Sur la vue de côté, on peut voir que les collecteurs 11 restent en position basse de sorte que le faisceau lumineux F1 reste orienté vers le haut V+7°, tandis que l'élément optique de sortie 12 n'a pas bougé. Le faisceau lumineux F1 qui sort de l'élément optique de sortie 12 va ainsi être orienté vers la droite et vers le haut tel qu'illustré par le carré noir dans la grille g illustrée.

La [Fig.36] illustre une position verticale nominale V+0°et une position latérale droite H+3° du faisceau lumineux F1. Sur la vue de dessus, on peut voir que les collecteurs 11 restent sur la gauche de sorte que le faisceau lumineux F1 reste orienté vers la droite H+3°, tandis que l'élément optique de sortie 12 n'a pas bougé. Pour revenir à la position verticale nominale V0°, sur la vue de côté, on peut voir qu'on tire sur l'actionneur vertical H2. Les collecteurs 11 remontent vers le haut à la position verticale nominale (leur axe MM' revient à l'horizontale) de sorte que le faisceau lumineux F1 revienne à sa position verticale nominale V0°. Le faisceau lumineux F1 qui sort de l'élément optique de sortie 12 va ainsi être orienté vers la droite et verticalement centré tel qu'illustré par le carré noir dans la grille g illustrée.

La [Fig.37] illustre une position verticale basse V-7°et une position latérale droite H°+3° du faisceau lumineux F1. Sur la vue de dessus, on peut voir que les collecteurs 11 restent sur la gauche de sorte que le faisceau lumineux F1 restent sur la droite H+3°, tandis que l'élément optique de sortie 12 n'a pas bougé. Pour aller à la position verticale basse V-7°, sur la vue de côté, on peut voir qu'on tire de nouveau sur l'actionneur vertical H2. Les collecteurs 11 remontent vers le haut en position haute (leur axe MM' s'incline vers le bas) de sorte que le faisceau lumineux F1 passe de la position verticale nominale V0° à la position verticale basse V-7°. Le faisceau lumineux F1 qui sort de l'élément optique de sortie 12 va ainsi être orienté en bas et vers la droite tel qu'illustré par le carré noir dans la grille g illustrée.

La [Fig.38] illustre une position verticale basse V-7°et une position latérale nominale H0° du faisceau lumineux F1. Pour retourner à la position latérale nominale H0, sur la vue de dessus, on peut voir qu'on tire sur l'actionneur latéral H1. Les collecteurs 11 se déplacent sur la droite de sorte que le faisceau lumineux F1 passe de la position latérale droite H+3° à la position latérale nominale H0, tandis que l'élément optique de sortie 12 n'a pas bougé. Sur la vue de côté, on peut voir que les collecteurs 11 restent en position haute (leur axe MM' reste incliné vers le bas). Le faisceau lumineux F1 qui sort de l'élément optique de sortie 12 va ainsi être orienté en bas et latéralement centré tel qu'illustré par le carré noir dans la grille g illustrée.

La [Fig.39] illustre une position verticale basse V-7°et une position latérale gauche H-3° du faisceau lumineux F1. Pour passer à la position latérale à gauche H-3°, sur la vue de dessus, on peut voir qu'on tire de nouveau sur l'actionneur latéral H1. Les collecteurs 11 se déplacent sur la droite de sorte que le faisceau lumineux F1 passe de la position latérale nominale H0° à la position latérale gauche H-3°, tandis que l'élément optique de sortie 12 n'a pas bougé. Sur la vue de côté, on peut voir que les collecteurs 11 restent en position haute (leur axe MM' reste incliné vers le bas). Le faisceau lumineux F1 qui sort de l'élément optique de sortie 12 va ainsi être orienté en bas et à gauche tel qu'illustré par le carré noir dans la grille g illustrée.

La [Fig.40] illustre une position verticale nominale V0°et une position latérale gauche H-3° du faisceau lumineux F1. Sur la vue de dessus, on peut voir que les collecteurs 11 restent sur la droite, tandis que l'élément optique de sortie 12 n'a pas bougé. Pour repasser à la position verticale nominale V0°, sur la vue de côté, on peut voir qu'on pousse sur l'actionneur vertical H2. Les collecteurs 11 redescendent en position verticale nominale (leur axe MM' revient à l'horizontal) de sorte que le faisceau lumineux F1 passe de la position verticale basse V-7° à la position verticale nominale V0°, tandis que l'élément optique de sortie 12 n'a pas bougé. Le faisceau lumineux F1 qui sort de l'élément optique de sortie 12 va ainsi être orienté à gauche et verticalement centré tel qu'illustré par le carré noir dans la grille g illustrée.

La [Fig.41] illustre une position verticale haute V+7°et une position latérale gauche H-3° du faisceau lumineux F1. Sur la vue de dessus, on peut voir que les collecteurs 11 restent sur la droite, tandis que l'élément optique de sortie 12 n'a pas bougé. Pour passer à la position verticale haute V+7°, sur la vue de côté, on peut voir qu'on pousse de nouveau sur l'actionneur vertical H2. Les collecteurs 11 redescendent vers le bas en position basse (leur axe MM' s'incline vers le haut) de sorte que le faisceau lumineux F1 passe de la position verticale nominale V0° à la position verticale haute V+7°, tandis que l'élément optique de sortie 12 n'a pas bougé. Le faisceau lumineux F1 qui sort de l'élément optique de sortie 12 va ainsi être orienté à gauche et en haut tel qu'illustré par le carré noir dans la grille g illustrée.

Bien entendu la description de l'invention n'est pas limitée aux modes de réalisation décrits ci-dessus et au domaine décrit ci-dessus. Ainsi, dans un autre mode de réalisation non limitatif, le ou les éléments optiques de sortie 12 sont des miroirs au lieu de lentilles de projection.

Ainsi, l'invention décrite présente notamment les avantages suivants :
- elle permet de déplacer le faisceau lumineux F1 latéralement,
- elle permet également de déplacer le faisceau lumineux F1 verticalement,
- elle permet de combiner un déplacement latéral et un déplacement vertical du faisceau lumineux F1,
- elle évite de bouger l'ensemble du module lumineux 1 (élément optique de sortie 12-collecteurs 11-sources lumineuses 10) à l'intérieur du dispositif lumineux. Par conséquent, une personne qui regarde le dispositif lumineux depuis l'extérieur du véhicule 2 ne verra aucune pièce bouger.
- elle permet pour le déplacement vertical et le déplacement latéral de supprimer les jeux avec les pièces de styles, jeux (de plusieurs millimètres) qu'il faut prévoir lorsque l'ensemble du module lumineux 1 est en mouvement à l'intérieur du dispositif lumineux, les jeux étant dans ce cas nécessaires pour les angles de débattement afin que le module lumineux ne vienne pas cogner sur les pièces de style. Par conséquent, elle évite des fuites de lumière qui traversent ces jeux. De plus, une personne qui regarde le dispositif lumineux depuis l'extérieur du véhicule 2 ne verra pas de jeux inesthétiques, ni les éléments techniques cachés derrière les masques, tel que dans un exemple non limitatif, les fils électriques.
- c'est une solution qui ne déforme pas le faisceau lumineux F1,
- puisque seuls les collecteurs 11 et sources lumineuses 10 bougent, c'est une solution qui permet d'avoir un module lumineux 1 plus compact dans le dispositif lumineux. Le boîtier du dispositif lumineux est par conséquent moins grand,
- elle permet de supprimer une pièce de structure qui est utilisée dans l'état de la technique antérieur qui prévoit de mouvoir l'ensemble du module lumineux 1 ce qui réduit l'encombrement et le poids,
- elle permet d'avoir des angles de débattement latéral et vertical suffisants sans déformer le faisceau lumineux F1,
- elle permet de ne pas avoir de glace de sortie en regard du module lumineux 1, glace de sortie qui est nécessaire dans la solution de l'état de la technique antérieure lorsque l'ensemble du module lumineux 1 bouge pour assurer son étanchéité (contre l'eau ou les salissures etc.). Sans glace de sortie, il n'y a pas de pertes lumineuses. Le module lumineux 1 est ainsi plus efficace.

## Revendications

1. Module lumineux (1) pour véhicule (2), ledit module lumineux (1) comprenant :
- au moins une source lumineuse(10) configurée pour émettre des rayons lumineux (R1),
- au moins un collecteur (11) associé à ladite au moins une source lumineuse (10), ledit collecteur (11) étant configuré pour collecter et orienter les rayons lumineux (R1) de ladite au moins une source lumineuse (10) vers au moins un élément optique de sortie (12),
- ledit au moins un élément optique de sortie (12) configuré pour transmettre lesdits rayons lumineux (R1) vers l'extérieur dudit véhicule (2) pour former un faisceau lumineux (F1), **caractérisé en ce que** ledit module lumineux (1) comprend en outre un système de déplacement relatif latéral (13) dudit au moins un collecteur (11) et de ladite au moins une source lumineuse (10) associée par rapport audit au moins un élément optique de sortie (12) de sorte à faire bouger latéralement ledit faisceau lumineux (F1),
dans lequel ledit système de déplacement relatif latéral (13) comprend :
- une liaison pivot de centre A et d'axe AE et une liaison rotule de centre D disposées latéralement de part et d'autre dudit au moins un élément optique de sortie (12),
- une liaison pivot de centre B et une liaison pivot ou liaison rotule de centre C disposées latéralement de part et d'autre du au moins un collecteur (11), la ou les liaisons pivots ayant un axe parallèle à l'axe AE,
- deux biellettes (G1, G2) parallèles et de même longueur reliant chacune respectivement la liaison pivot de centre A et la liaison pivot de centre B, et la liaison rotule de centre D et la liaison pivot ou liaison rotule de centre C de façon à former un parallélogramme ABCD,
- un actionneur primaire (H1) configuré pour faire tourner la liaison pivot de centre A dans une direction sensiblement transversale (AD) de sorte à déplacer transversalement le au moins un collecteur (11),
- une liaison linéaire annulaire primaire de centre F reliant ledit actionneur primaire (H1) à une desdites biellettes (G1, G2) pour former une manivelle primaire (M1).

2. Module lumineux (1) selon la revendication 1, dans lequel ledit module lumineux (1) comprend une pluralité de sources lumineuses (10) et une pluralité de collecteurs (11) associés chacun à une source lumineuse (10).

3. Module lumineux (1) selon la revendication 2, dans lequel ledit module lumineux (1) comprend une pluralité d'éléments optiques de sortie (12) dont l'une partie (12a) des éléments optiques de sortie (12) est associée à une première portion (F1a) dudit faisceau lumineux (F1) et l'autre partie (12b) des éléments optiques de sortie (12) est associée à une deuxième portion (F1b) dudit faisceau lumineux (F1).

4. Module lumineux (1) selon la revendication précédente, dans lequel la première portion (F1a) représente une coupure inclinée dudit faisceau lumineux (F1), et la deuxième portion (F1b) représente une coupure plate dudit faisceau lumineux (F1).

5. Module lumineux (1) selon l'une quelconque des revendications précédentes, dans lequel ladite liaison pivot de centre A et d'axe AE est réalisée au moyen d'une liaison rotule de centre A et d'une liaison linéaire annulaire secondaire de centre E.

6. Module lumineux (1) selon l'une quelconque des revendications précédentes, dans lequel ledit au moins un collecteur (11), ledit au moins un élément optique de sortie (12) et lesdites biellettes (G1, G2) sont configurés pour prendre une position (PH0°) dans laquelle ledit parallélogramme ABCD forme un rectangle.

7. Module lumineux (1) selon l'une quelconque des revendications précédentes, dans lequel le déplacement relatif latéral dudit au moins un collecteur (11) et de ladite au moins une source lumineuse (10) associée génère un angle de débattement latéral compris entre plus ou moins 5° et notamment entre plus ou moins 3° pour le faisceau lumineux (F1).

8. Module lumineux (1) selon l'une quelconque des revendications précédentes, dans lequel ledit au moins un élément optique de sortie (12) présente un angle d'inclinaison (β) par rapport à une perpendiculaire à un axe optique (Aa) du module lumineux (1) maximum de 15°.

9. Module lumineux (1) selon l'une quelconque des revendications 5, ou 6 à 8 ensemble la revendication 5, dans lequel ledit module lumineux (1) comprend en outre un système de déplacement relatif vertical (14) dudit au moins un collecteur (11) et de ladite au moins une source lumineuse (10) associée par rapport audit au moins un élément optique de sortie (12) de sorte à faire bouger verticalement ledit faisceau lumineux (F1).

10. Module lumineux (1) selon la revendication précédente, dans lequel ladite liaison linéaire annulaire de centre E relie un actionneur secondaire (H2) à une desdites biellettes (G1, G2) pour former une manivelle secondaire (M2), ledit actionneur secondaire (H2) étant configuré pour faire tourner la pluralité de collecteurs (11) autour de l'axe AD.

11. Module lumineux (1) selon la revendication 9 ou la revendication 10, dans lequel ladite liaison linéaire annulaire primaire (F) est d'axe parallèle à l'axe AE.

12. Module lumineux (1) selon l'une quelconque des revendications 9 à 11, dans lequel le déplacement relatif vertical dudit au moins un collecteur (11) et de ladite au moins une source lumineuse (10) associée génère un angle de débattement vertical compris entre plus ou moins 10° et notamment entre plus ou moins 7°pour le faisceau lumineux (F1).

13. Module lumineux (1) selon l'une quelconque des revendications précédentes, dans lequel ledit au moins un élément optique de sortie (12) présente un rayon de courbure minimum de 200mm.

14. Dispositif lumineux (4) comprenant un module lumineux (1) selon l'une quelconque des revendications précédentes.

## Patentansprüche

1. Lichtmodul (1) für ein Fahrzeug (2), wobei das Lichtmodul (1) umfasst:
- mindestens eine Lichtquelle (10), die konfiguriert ist, um Lichtstrahlen (R1) auszusenden,
- mindestens einen Kollektor (11), der mit der mindestens einen Lichtquelle (10) verbunden ist, wobei der Kollektor (11) konfiguriert ist, um die Lichtstrahlen (R1) der mindestens einen Lichtquelle (10) zu sammeln und zu mindestens einem optischen Ausgangselement (12) zu lenken,
- das mindestens eine optische Ausgangselement (12), das konfiguriert ist, um die Lichtstrahlen (R1) nach außen des Fahrzeugs (2) zu übertragen, um einen Lichtstrahl (F1) zu bilden, **dadurch gekennzeichnet, dass** das Lichtmodul (1) ferner ein System zur relativen seitlichen Verschiebung (13) des mindestens einen Kollektors (11) und der mindestens einen zugehörigen Lichtquelle (10) in Bezug auf das mindestens eine optische Ausgangselement (12) umfasst, um den Lichtstrahl (F1) seitlich zu bewegen,
wobei das System zur relativen seitlichen Verschiebung (13) umfasst:
- eine Drehverbindung mit Zentrum A und Achse AE und eine Kugelgelenkverbindung mit Zentrum D, die seitlich auf beiden Seiten des mindestens einen optischen Ausgangselements (12) angeordnet sind,
- eine Drehverbindung mit Zentrum B und eine Drehverbindung oder Kugelgelenkverbindung mit Zentrum C, die seitlich auf beiden Seiten des mindestens einen Kollektors (11) angeordnet sind, wobei die Drehverbindung(en) eine Achse parallel zur Achse AE haben,
- zwei parallele Pleuelstangen (G1, G2) gleicher Länge, die jeweils die Drehverbindung mit Zentrum A und die Drehverbindung mit Zentrum B sowie die Kugelgelenkverbindung mit Zentrum D und die Drehverbindung oder Kugelgelenkverbindung mit Zentrum C verbinden, um ein Parallelogramm ABCD zu bilden,
- einen Primäraktor (H1), der konfiguriert ist, um die Drehverbindung mit Zentrum A in einer im Wesentlichen transversalen Richtung (AD) zu drehen, um den mindestens einen Kollektor (11) transversal zu verschieben,
- eine primäre ringförmige Linearverbindung mit Zentrum F, die den Primäraktor (H1) mit einer der Pleuelstangen (G1, G2) verbindet, um eine primäre Kurbel (M1) zu bilden.

2. Lichtmodul (1) nach Anspruch 1, wobei das Lichtmodul (1) eine Vielzahl von Lichtquellen (10) und eine Vielzahl von Kollektoren (11) umfasst, die jeweils mit einer Lichtquelle (10) verbunden sind.

3. Lichtmodul (1) nach Anspruch 2, wobei das Lichtmodul (1) eine Vielzahl von optischen Ausgangselementen (12) umfasst, von denen ein Teil (12a) der optischen Ausgangselemente (12) mit einem ersten Abschnitt (F1a) des Lichtstrahls (F1) verbunden ist und der andere Teil (12b) der optischen Ausgangselemente (12) mit einem zweiten Abschnitt (F1b) des Lichtstrahls (F1) verbunden ist.

4. Lichtmodul (1) nach dem vorhergehenden Anspruch, wobei der erste Abschnitt (F1a) einen geneigten Schnitt des Lichtstrahls (F1) darstellt und der zweite Abschnitt (F1b) einen flachen Schnitt des Lichtstrahls (F1) darstellt.

5. Lichtmodul (1) nach einem der vorhergehenden Ansprüche, wobei die Drehverbindung mit Zentrum A und Achse AE mittels einer Kugelgelenkverbindung mit Zentrum A und einer sekundären ringförmigen Linearverbindung mit Zentrum E realisiert wird.

6. Lichtmodul (1) nach einem der vorhergehenden Ansprüche, wobei der mindestens eine Kollektor (11), das mindestens eine optische Ausgangselement (12) und die Pleuelstangen (G1, G2) konfiguriert sind, um eine Position (PH0°) einzunehmen, in der das Parallelogramm ABCD ein Rechteck bildet.

7. Lichtmodul (1) nach einem der vorhergehenden Ansprüche, wobei die relative seitliche Verschiebung des mindestens einen Kollektors (11) und der mindestens einen zugehörigen Lichtquelle (10) einen seitlichen Schwenkwinkel zwischen plus oder minus 5° und insbesondere zwischen plus oder minus 3° für den Lichtstrahl (F1) erzeugt.

8. Lichtmodul (1) nach einem der vorhergehenden Ansprüche, wobei das mindestens eine optische Ausgangselement (12) einen Neigungswinkel (β) in Bezug auf eine Senkrechte zu einer optischen Achse (Aa) des Lichtmoduls (1) von maximal 15° aufweist.

9. Lichtmodul (1) nach einem der Ansprüche 5 oder 6 bis 8 zusammen mit Anspruch 5, wobei das Lichtmodul (1) ferner ein System zur relativen vertikalen Verschiebung (14) des mindestens einen Kollektors (11) und der mindestens einen zugehörigen Lichtquelle (10) in Bezug auf das mindestens eine optische Ausgangselement (12) umfasst, um den Lichtstrahl (F1) vertikal zu bewegen.

10. Lichtmodul (1) nach dem vorhergehenden Anspruch, wobei die ringförmige Linearverbindung mit Zentrum E einen Sekundäraktor (H2) mit einer der Pleuelstangen (G1, G2) verbindet, um eine Sekundärkurbel (M2) zu bilden, wobei der Sekundäraktor (H2) konfiguriert ist, um die Vielzahl von Kollektoren (11) um die Achse AD zu drehen.

11. Lichtmodul (1) nach Anspruch 9 oder Anspruch 10, wobei die primäre ringförmige Linearverbindung (F) eine Achse parallel zur Achse AE hat.

12. Lichtmodul (1) nach einem der Ansprüche 9 bis 11, wobei die relative vertikale Verschiebung des mindestens einen Kollektors (11) und der mindestens einen zugehörigen Lichtquelle (10) einen vertikalen Schwenkwinkel zwischen plus oder minus 10° und insbesondere zwischen plus oder minus 7° für den Lichtstrahl (F1) erzeugt.

13. Lichtmodul (1) nach einem der vorhergehenden Ansprüche, wobei das mindestens eine optische Ausgangselement (12) einen minimalen Krümmungsradius von 200 mm aufweist.

14. Lichtvorrichtung (4), die ein Lichtmodul (1) nach einem der vorhergehenden Ansprüche umfasst.

## Claims

1. A luminous module (1) for a vehicle (2), said luminous module (1) comprising:
- at least one light source (10) configured to emit light rays (R1),
- at least one collector (11) associated with said at least one light source (10), said collector (11) being configured to collect and direct the light rays (R1) from said at least one light source (10) toward at least one exit optical element (12),
- said at least one exit optical element (12) configured to transmit said light rays (R1) toward the outside of said vehicle (2) to form a light beam (F1), **characterized in that** said luminous module (1) further comprises a system for lateral relative movement (13) of said at least one collector (11) and said at least one associated light source (10) relative to said at least one exit optical element (12) in such a way as to cause said light beam (F1) to move laterally,
wherein said system for lateral relative movement (13) comprises:
- a pivot connection of center A and axis AE and a ball joint of center D which are arranged laterally on either side of said at least one exit optical element (12),
- a pivot connection of center B and a pivot connection or ball joint of center C which are arranged laterally on either side of the at least one collectors (11), the pivot connection or connections having an axis parallel to the axis AE,
- two parallel connecting rods (G1, G2) with the same length, each respectively connecting the pivot connection of center A and the pivot connection of center B, and the ball joint of center D and the pivot connection or ball joint of center C in such a way as to form a parallelogram ABCD,
- a primary actuator (H1) configured to rotate the pivot connection of center A in a substantially transverse direction (AD) in such a way as to transversely move the at least one collector (11),
- a primary annular linear connection of center F connecting said primary actuator (H1) to one of said connecting rods (G1, G2) to form a primary crank (M1).

2. The luminous module (1) as claimed in claim 1, wherein said luminous module (1) comprises a plurality of light sources (10) and a plurality of collectors (11) each associated with a light source (10).

3. The luminous module (1) as claimed in claim 2, wherein said luminous module (1) comprises a plurality of exit optical elements (12), of which one part (12a) of the exit optical elements (12) is associated with a first portion (F1a) of said light beam (F1) and the other part (12b) of the exit optical elements (12) is associated with a second portion (F1b) of said light beam (F1).

4. The luminous module (1) as claimed in the preceding claim, wherein the first portion (F1a) represents an inclined cut-off of said light beam (F1), and the second portion (F1b) represents a flat cut-off of said light beam (F1).

5. The luminous module (1) as claimed in any one of the preceding claims, wherein said pivot connection of center A and axis AE is produced by means of a ball joint of center A and a secondary annular linear connection of center E.

6. The luminous module (1) as claimed in any one of the preceding claims, wherein said at least one collector (11), said at least one exit optical element (12) and said connecting rods (G1, G2) are configured to take up a position (PH0°) in which said parallelogram ABCD forms a rectangle.

7. The luminous module (1) as claimed in any one of the preceding claims, wherein the lateral relative movement of said at least one collector (11) and said at least one associated light source (10) generates an angle of lateral travel of between plus or minus 5° and in particular between plus or minus 3° for the light beam (F1).

8. The luminous module (1) as claimed in any one of the preceding claims, wherein said at least one exit optical element (12) has an angle of inclination (β) relative to a perpendicular to an optical axis (Aa) of the luminous module (1) of 15° maximum.

9. The luminous module (1) as claimed in any one of claims 5, or 6 to 8 in combination with claim 6, wherein said luminous module (1) further comprises a system for vertical relative movement (14) of said at least one collector (11) and said at least one associated light source (10) relative to said at least one exit optical element (12) in such a way as to cause said light beam (F1) to move vertically.

10. The luminous module (1) as claimed in the preceding claim, wherein said annular linear connection of center E connects a secondary actuator (H2) to one of said connecting rods (G1, G2) to form a secondary crank (M2), said secondary actuator (H2) being configured to rotate the plurality of collectors (11) about the axis AD.

11. The luminous module (1) as claimed in claim 9 or claim 10, wherein said primary annular linear connection (F) has an axis parallel to the axis AE.

12. The luminous module (1) as claimed in any one of claims 9 to 11, wherein the vertical relative movement of said at least one collector (11) and said at least one associated light source (10) generates an angle of vertical travel of between plus or minus 10° and in particular between plus or minus 7° for the light beam (F1).

13. The luminous module (1) as claimed in any one of the preceding claims, wherein said at least one exit optical element (12) has a minimum radius of curvature of 200 mm.

14. A luminous device (4) comprising a luminous module (1) as claimed in any one of the preceding claims.
